# EUROPEAN PATENT APPLICATION

(11) **EP 4 163 319 A1**
(43) Date of publication of application: **12.04.2023**
(21) Application number: 21842205.3
(22) Date of filing: 07.07.2021
(51) Int. Cl.: C08G 69/32, C08G 73/14, C08L 77/10, C08L 79/08

(54) **POLYAMIDE, POLYAMIDE-IMIDE, DERIVATIVES OF THESE, OPTICAL FILM, DISPLAY DEVICE, AND PRODUCTION METHODS THEREFOR**

(30) Priority: 13.07.2020 JP 2020119697
(71) Applicant: Central Glass Company, Limited, Ube-shi, Yamaguchi 755-0001 (JP)
(72) Inventor: EGUCHI Hiroshi, Kawagoe-shi, Saitama 350-1159 (JP); HORI Hiroto, Kawagoe-shi, Saitama 350-1159 (JP); HOSOI Kenji, Kawagoe-shi, Saitama 350-1159 (JP)
(74) Representative: Manitz Finsterwald Patent- und Rechtsanwaltspartnerschaft mbB
(86) International application number: PCT/JP2021/025559
(87) International publication number: WO 2022/014425

(57) **Abstract**

Provided are a polyamide having a structural unit represented by General Formula [1], and the like. In General Formula [1], R¹ is a divalent organic group represented by General Formula [2], and R² is a divalent organic group. In General Formula [2], n₁ and n₂ are each independently an integer of 0 to 4, and in a case where a plurality of R³' s are present, the plurality of R³' s each independently represent a monovalent substituent.

## Description

### TECHNICAL FIELD

The present invention relates to a polyamide, a polyamide-imide, a polyamide-amic acid, a polyamide solution, a polyamide-imide solution, a polyamide-amic acid solution, an optical film, a display device, a production method for a polyamide, a production method for a polyamide-imide, and a production method for an optical film or a substrate for a display device.

### BACKGROUND ART

In recent years, in the field of substrates for display devices such as an organic electroluminescence display, a liquid crystal display, and an electronic paper, weight reduction of the devices has been required.

In the related art, in these devices, an electronic element such as a thin film transistor and a transparent electrode is formed on a glass substrate. In a case where this glass material can be replaced with an optical film or a substrate for a display device, which is formed of an organic polymer, thinning and weight reduction can be achieved.

On the other hand, in an electronic device including a display such as a smart phone and a tablet PC, a cover film may be adhered to protect a transparent substrate on a surface of the display.

A polyamide has excellent heat resistance, mechanical properties, and electrical properties, and is useful as an industrial material. Attempts have also been made to apply the polyamide to the optical film and the like.

As an example, Patent Document 1 discloses a fluorine-containing polyamide as an optical polyamide film.

As another example, Patent Document 2 discloses a fluorine-containing polyamide having a hexafluoroisopropanol group (hereinafter, also referred to as an HFIP group) . According to Patent Document 2, the fluorine-containing polyamide has good transparency, low refractive index, low dielectric properties, and the like.

### RELATED DOCUMENT

### PATENT DOCUMENT

[Patent Document 1] Pamphlet of International Publication No. WO2004/039863
[Patent Document 2] Japanese Unexamined Patent Publication No. 2007-119504

### SUMMARY OF THE INVENTION

### TECHNICAL PROBLEM

In general, the polyamide (particularly, an aromatic ring-containing polyamide) has excellent heat resistance, mechanical properties, and electrical properties. On the other hand, due to its rigidity and strong intermolecular hydrogen bonding, the polyamide has low solubility in a solvent, and there is a problem that the polyamide is only dissolved in a limited solvent (organic solvent), and that the polyamide dissolved in the solvent precipitates due to an external stimulus such as shaking. In a case where there is a problem that polyamide precipitates from the polyamide solution due to external stimulus, industrially, problems such as clogging of pipes with the polyamide solution may occur.

In addition, among monomer materials for polymerizing the fluorine-containing polyamide, an aromatic diamine having a trifluoromethyl group represented by the following formula is easily available.

However, with polyamides synthesized using the monomer of the forming formula, there is room for improvement in terms of film-forming properties.

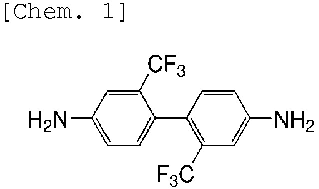

In view of the above-described circumstances, the present inventors have conducted studies for the purpose of providing a polyamide-based resin with high solvent solubility and good film-forming properties.

### SOLUTION TO PROBLEM

As a result of studies, the present inventors have found that a polyamide obtained by, for example, reacting an aromatic diamine having a 1,1,1-trifluoro-2,2-ethanediyl group (-C(CF₃)H-) with a dicarboxylic acid monomer and/or a derivative thereof can solve the above-described problems.

A polyamide according to an aspect of the present invention has a structural unit represented by General Formula [1]. 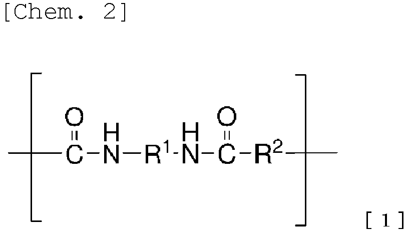 In General Formula [1],
R¹ is a divalent organic group represented by General Formula [2], and
R² is a divalent organic group. 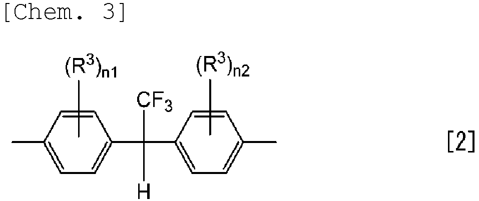
In General Formula [2],
n₁ and n₂ are each independently an integer of 0 to 4, and
in a case where a plurality of R³'s are present, the plurality of R³'s each independently represent a monovalent substituent.

A polyamide-imide according to an aspect of the present invention has a structural unit represented by General Formula [1A] .

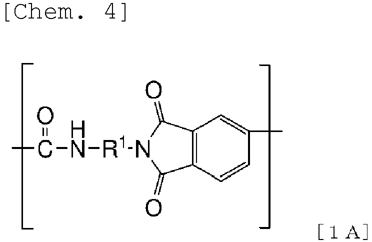

In General Formula [1A],
R¹ is a divalent organic group represented by General Formula [2] .

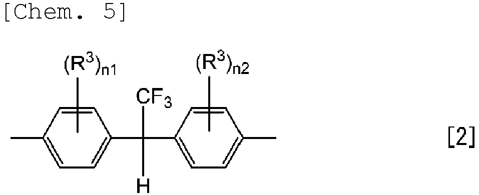

In General Formula [2],
n₁ and n₂ are each independently an integer of 0 to 4, and
in a case where a plurality of R³'s are present, the plurality of R³'s each independently represent a monovalent substituent.

A polyamide-amic acid according to an aspect of the present invention has a structural unit represented by General Formula [1B] .

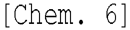

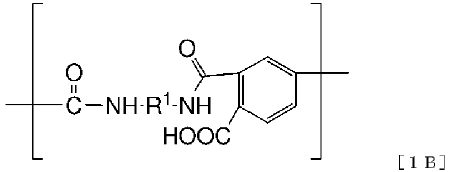

In General Formula [1B],
R¹ is a divalent organic group represented by General Formula [2] .

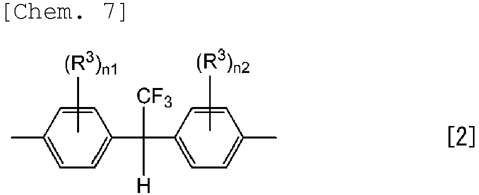

In General Formula [2],
n₁ and n₂ are each independently an integer of 0 to 4, and
in a case where a plurality of R³'s are present, the plurality of R³'s each independently represent a monovalent substituent.

A polyamide solution according to an aspect of the present invention contains the above-described polyamide and an organic solvent.

A polyamide-imide solution according to an aspect of the present invention contains the above-described polyamide-imide and an organic solvent.

A polyamide-amic acid solution according to an aspect of the present invention contains the above-described polyamide-amic acid and an organic solvent.

An optical film according to an aspect of the present invention includes the above-described polyamide.

An optical film according to an aspect of the present invention includes the above-described polyamide-imide.

An optical film according to an aspect of the present invention includes the above-described polyamide-amic acid.

An optical film according to an aspect of the present invention includes the above-described polyamide-imide and the above-described polyamide-amic acid.

A display device according to an aspect of the present invention includes any one of the optical films described above.

A production method for a polyamide according to an aspect of the present invention includes a step of polycondensing a diamine represented by General formula [2A] and at least one dicarboxylic acid chloride selected from the followings to obtain the polyamide having a structural unit represented by General Formula [1].

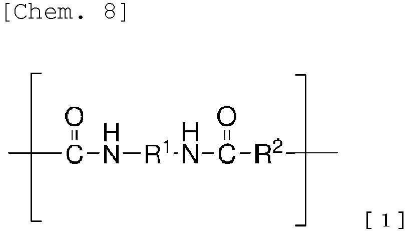

In General Formula [1],
R¹ is a divalent organic group represented by General Formula [2], and
R² is a divalent organic group.

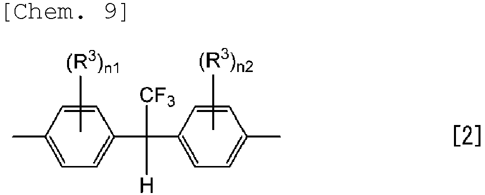

In General Formula [2],
n₁ and n₂ are each independently an integer of 0 to 4, and
in a case where a plurality of R³'s are present, the plurality of R³'s each independently represent a monovalent substituent.

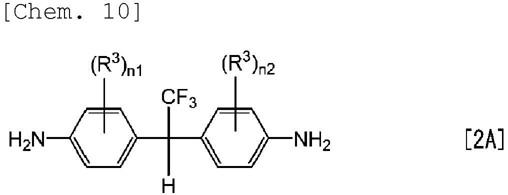

In General Formula [2A],
definitions of n₁, n₂, and R³ are the same as n₁, n₂, and R³ in General Formula [2].

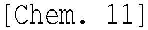

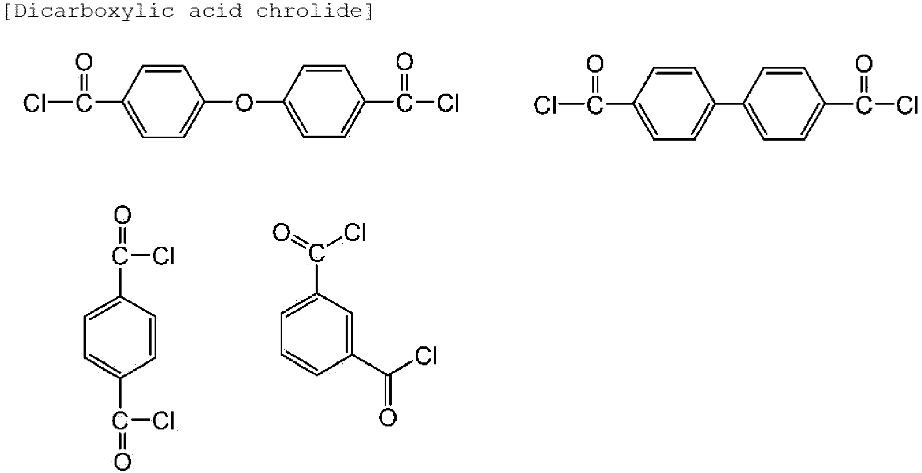

A production method for a polyamide-imide according to an aspect of the present invention includes a step of polycondensing a diamine represented by General formula [2A] and trimellitic anhydride chloride to obtain the polyamide-imide having a structural unit represented by General Formula [1A].

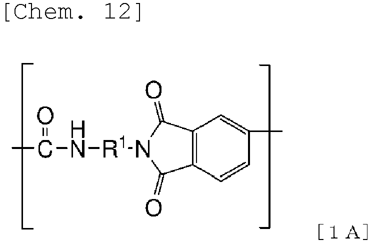

In General Formula [1A],
R¹ is a divalent organic group represented by General Formula [2] .

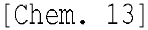

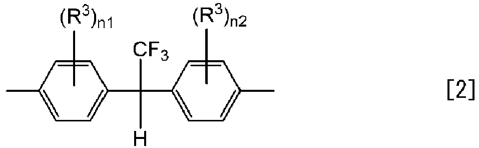

In General Formula [2],
n₁ and n₂ are each independently an integer of 0 to 4, and
in a case where a plurality of R³'s are present, the plurality of R³'s each independently represent a monovalent substituent.

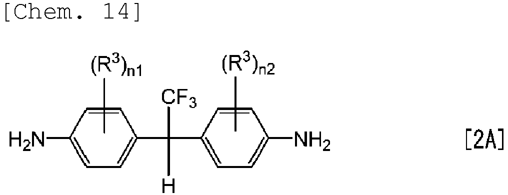

In General Formula [2A], definitions of n₁, n₂, and R³ are the same as n₁, n₂, and R³ in General Formula [2] .

### ADVANTAGEOUS EFFECTS OF INVENTION

According to the present invention, a polyamide-based resin with high solvent solubility and good film formability, with which a film having excellent transparency or heat resistance as an optical film can be formed.

### DESCRIPTION OF EMBODIMENTS

Hereinafter, embodiments of the present invention will be described in detail.

In the present specification, the notation "X to Y" in the description of numerical range means X or more and Y or less, unless otherwise specified. For example, "1% to 5% by mass" means "1% by mass or more and 5% by mass or less".

In the notation of groups (atomic groups) in the present specification, a notation without indicating whether it is substituted or unsubstituted includes both those having no substituent and those having a substituent. For example, a term "alkyl group" includes not only alkyl groups having no substituent (unsubstituted alkyl groups) but also alkyl groups having a substituent (substituted alkyl groups).

A term "organic group" used in the present specification means an atomic group obtained by removing one or more hydrogen atoms from an organic compound, unless otherwise specified. For example, a "monovalent organic group" represents an atomic group obtained by removing one hydrogen atom from an optional organic compound.

In the chemical formulae in the present specification, a notation "Me" represents a methyl group (CH₃).

In the present specification, a term "fluoral" means trifluoroacetaldehyde.

In the present specification, a term " (meth)acryloyl group" includes both acryloyl group and methacryloyl group.

Unless otherwise specified, a "weight-average molecular weight" in the present specification is a value obtained by measuring by gel permeation chromatography (hereinafter, may be referred to as "GPC") and converting to polystyrene using a standard polystyrene calibration curve.

In the present specification, terms "polyamide-based resin" and "polyamide and the like" are used as concepts encompassing a polyamide, a polyamide-imide, and a polyamide-amic acid. These are common in that they include a 1,1,1-trifluoro-2,2-ethanediyl group (-C(CF₃)H-) and that they includes an amide bond.

The polyamide, polyamide-imide, and polyamide-amic acid are described below.

### [Polyamide]

A polyamide according to the present embodiment has at least a structural unit represented by General Formula [1].

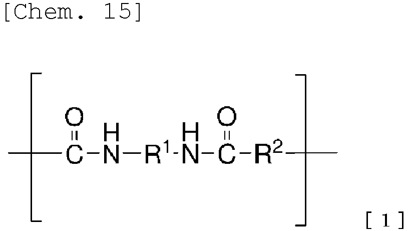

In General Formula [1],
R¹ is a divalent organic group represented by General Formula [2], and
R² is a divalent organic group.

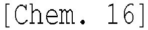

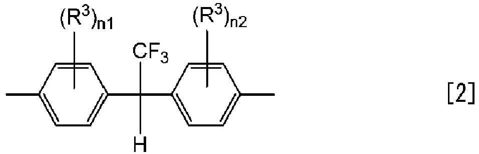

In General Formula [2],
n₁ and n₂ are each independently an integer of 0 to 4, and
in a case where a plurality of R³'s are present, the plurality of R³'s each independently represent a monovalent substituent.

In General Formula [1], the divalent organic group of R² preferably includes an organic group selected from the group consisting of a linear or branched aliphatic hydrocarbon group, an alicyclic group, and an aromatic ring. From the viewpoint of heat resistance, R² preferably includes an alicyclic group or an aromatic ring.

R² may contain a fluorine atom, a chlorine atom, an oxygen atom, a sulfur atom, or a nitrogen atom in its structure. In addition, in a case where hydrogen atoms are present in the structure, a part or all of the hydrogen atoms may be substituted with an alkyl group, a fluoroalkyl group, a carboxyl group, a hydroxy group, or a cyano group.

R² is preferably any of the following divalent organic groups.

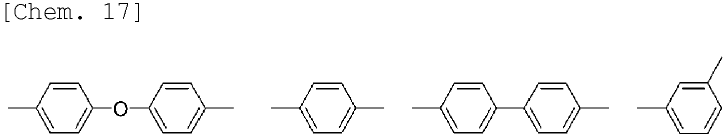

In R¹ in General Formula [1], that is, in the divalent organic group represented by General Formula [2], n₁ and n₂ are each independently an integer of 0 to 4.

In a case where a plurality of R³'s are present, the plurality of R³'s each independently represent a monovalent substituent. The monovalent substituent is not particularly limited, and examples thereof include an alkyl group, an alkoxy group, a cycloalkyl group, an aryl group, a (meth)acryloyl group, an alkenyl group, an alkynyl group, an aryloxy group, an amino group, an alkylamino group, an arylamino group, a cyano group, a nitro group, a silyl group, a carboxy group, a carboxyalkyl group, and a halogeno group (for example, a fluoro group). These may further have a substituent such as a fluorine atom and a carboxy group.

As the monovalent substituent of R³, an alkyl group, an alkoxy group, a fluorinated alkyl group (for example, a trifluoromethyl group), a halogeno group (for example, a fluoro group), or a nitro group is preferable.

Specific examples of the alkyl group in R³ include linear or branched alkyl groups having 1 to 6 carbon atoms. Among these, an n-butyl group, an s-butyl group, an isobutyl group, a t-butyl group, an n-propyl group, an i-propyl group, an ethyl group, or a methyl group is preferable, an ethyl group or a methyl group is more preferable, and a methyl group is still more preferable.

Specific examples of the alkoxy group in R³ include linear or branched alkoxy groups having 1 to 6 carbon atoms. Among these, an n-butoxy group, an s-butoxy group, an isobutoxy group, a t-butoxy group, n-propoxy, an i-propoxy group, an ethoxy group, or a methoxy group is preferable, and an ethoxy group or a methoxy group is particularly preferable.

The monovalent substituent in R³, such as the alkyl group and the alkoxy group, may be substituted on any carbon thereof with any number and any combination of halogen atoms, polymerizable groups, alkoxy groups, haloalkoxy groups, and the like. Examples of the polymerizable group herein includes an epoxy group-containing group, an oxetanyl group-containing group, a carbon-carbon double bond-containing group (for example, a vinyl group and an allyl group) . Furthermore, in a case where the number of R³'s is 2 or more, these two or more R³'s may be linked to each other to form a saturated or unsaturated, monocyclic or polycyclic group having 3 to 10 carbon atoms.

In General Formula [2], n₁ is preferably 0 to 2, and n₂ is preferably 0 to 2.

As a preferred example, one or both of n₁ and n₂ are not 0 (that is, at least one of n₁ or n₂ is 1 or 2), and at least one of R³'s is a methyl group. Since a benzene ring in General Formula [2] has an appropriate number and size of substituents, it is considered that molecular mobility of the polyamide-based resin is moderately suppressed. As a result, there is a tendency that, for example, heat resistance can be further improved while obtaining good film-forming properties.

As another preferred example, one or both of n₁ and n₂ are 0.

Examples of the divalent organic group represented by General Formula [2] include the following.

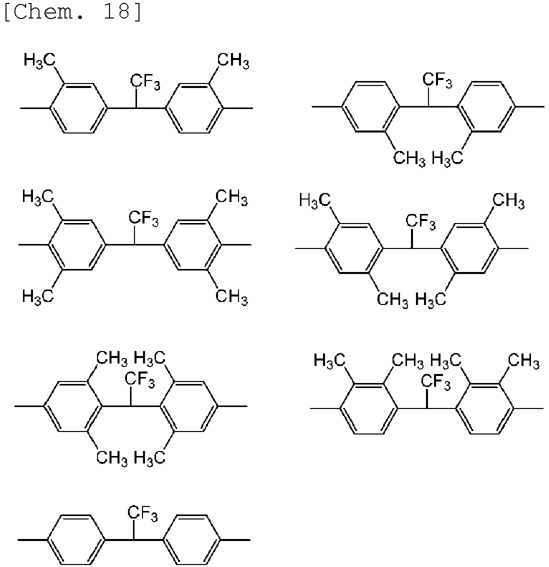

The polyamide according to the present embodiment is a polyamide having a structural unit represented by any one of the following formulae.

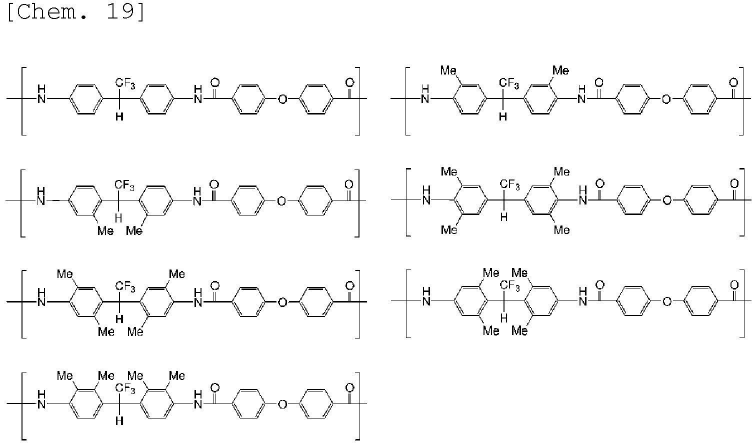

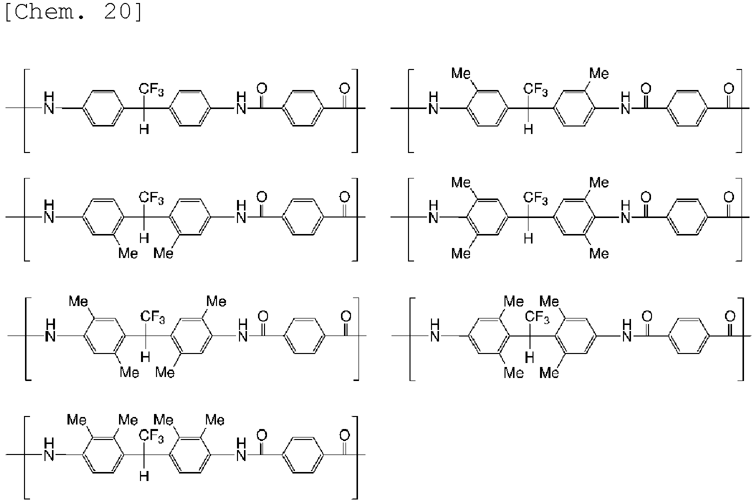

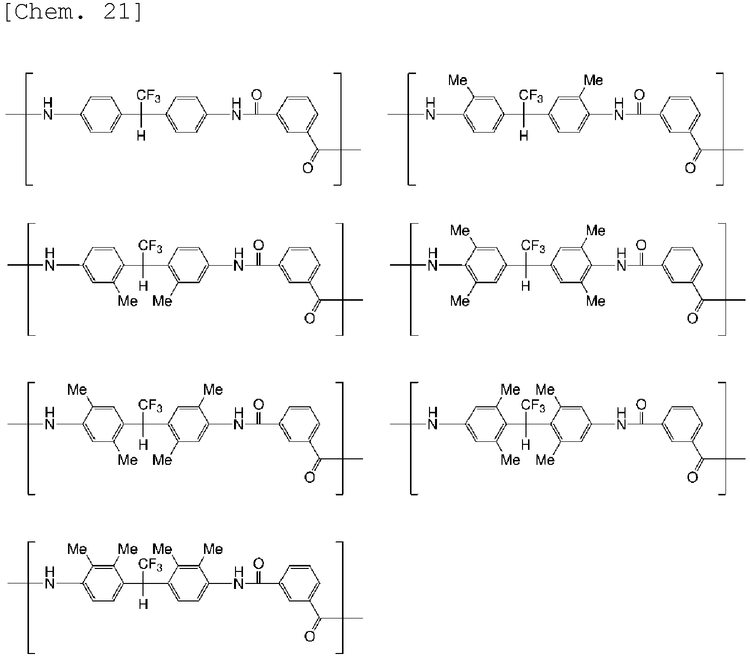

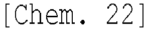

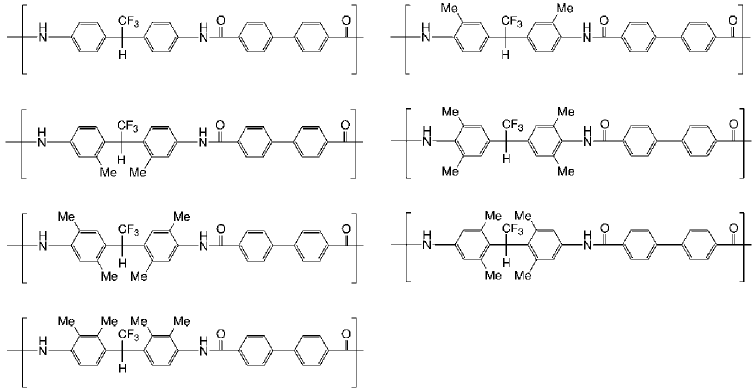

A weight-average molecular weight of the polyamide according to the present embodiment is not particularly limited. However, considering the use of polyamide as an optical film or a substrate for a display device, the weight-average molecular weight of the polyamide is preferably 1000 to 1000000 and more preferably 30000 to 200000. In a case where the weight-average molecular weight thereof is an appropriate value, there is a tendency that film formability and various performances in a case of forming a film are improved.

### [Polyamide-imide]

A polyamide-imide according to the present embodiment has at least a structural unit represented by General Formula [1A].

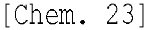

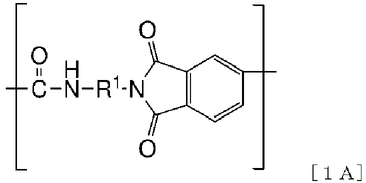

In General Formula [1A], R¹ is a divalent organic group represented by General Formula [2]. In General Formula [2], definitions and preferred aspects of n₁, n₂, and R³ are as described in the section of [Polyamide].

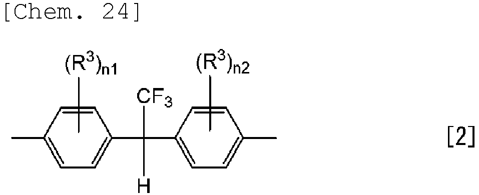

The polyamide-imide according to the present embodiment, which has the structural unit represented by General Formula [1A], is a polyamide-imide having a structural unit represented by any one of the following formulae.

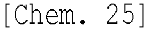

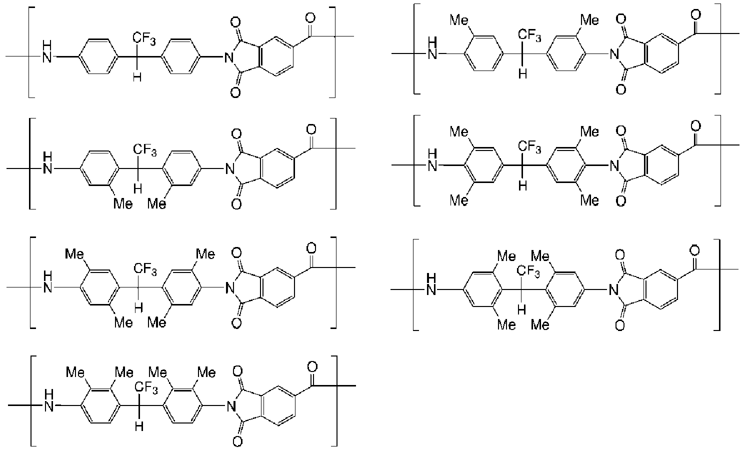

A weight-average molecular weight of the polyamide-imide according to the present embodiment is not particularly limited. However, considering the use of polyamide-imide as an optical film and a substrate for a display device, the weight-average molecular weight of the polyamide is preferably 1000 to 1000000 and more preferably 30000 to 200000. In a case where the weight-average molecular weight thereof is an appropriate value, there is a tendency that film formability and various performances in a case of forming a film are improved.

### [Polyamide-amic acid]

A polyamide-amic acid (polyamidoamic acid) according to the present embodiment has at least a structural unit represented by General Formula [1B].

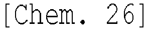

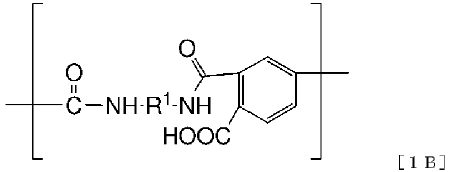

In General Formula [1B], R¹ is a divalent organic group represented by General Formula [2]. In General Formula [2], definitions and preferred aspects of n₁, n₂, and R³ are as described in the section of [Polyamide].

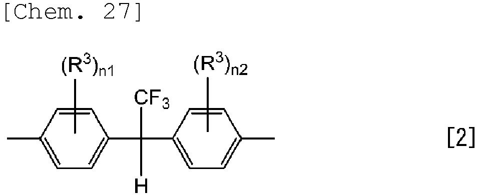

The polyamide-amic acid according to the present embodiment is a polyamide-amic acid having a structural unit represented by any one of the followings.

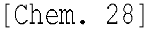

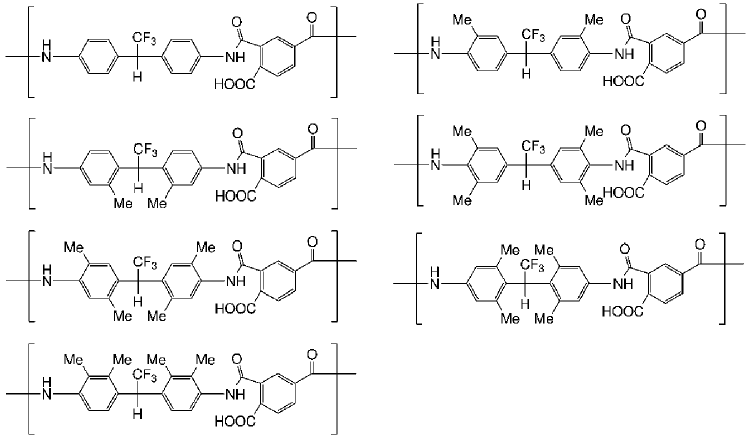

A weight-average molecular weight of the polyamide-amic acid according to the present embodiment is not particularly limited. However, considering the use of polyamide-amic acid as an optical film and a substrate for a display device, the weight-average molecular weight of the polyamide-amic acid is preferably 1000 to 1000000 and more preferably 30000 to 200000. In a case where the weight-average molecular weight thereof is an appropriate value, there is a tendency that film formability and various performances in a case of forming a film are improved.

The polyamide, the polyamide-imide, and the polyamide-amic acid according to the present embodiments may be used alone, or two or more thereof may be mixed and used. For example, a solution or optical film described later may include only one of the polyamide, the polyamide-imide, or the polyamide-amic acid as a polymer, or may include two or more of these polymers.

### [Production method for polyamide]

A production method for a polyamide (Formula [1] described above) according to the present embodiment is not particularly limited. Examples thereof include a production method by reacting a diamine represented by General Formula [2A] with a compound represented by General Formula (DC-1) or (DC-2). More specific examples thereof include a method for producing a polyamide (Formula [1] described above) by condensation polymerization of the following diamine and the compound represented by General Formula (DC-1) or (DC-2) in an organic solvent.

The polycondensation reaction can be carried out at -20°C to 80°C. In the reaction, it is preferable that the diamine and the compound represented by General Formula (DC-1) or (DC-2) are reacted at a molar ratio of 1:1. Although the reaction time is not particularly limited, it is typically approximately 1 to 24 hours.

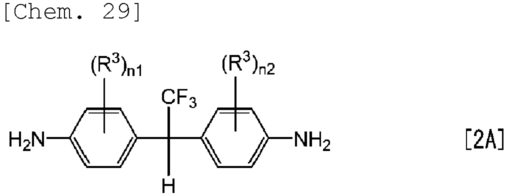

In General Formula [2A], definitions or specific examples of n₁, n₂, and R³ are the same as n₁, n₂, and R³ in General Formula [2] .

Incidentally, the diamine represented by General Formula [2A] can be obtained, for example, by reacting a compound having an aniline skeleton with fluoral. Details of the reaction are referred to Examples described later.

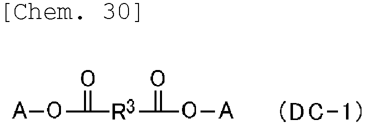

In General Formula (DC-1),
definition and specific examples of R³ are the same as R³ in General Formula [2], and
A's are each independently a hydrogen atom, an alkyl group having 1 to 10 carbon atoms, or an aromatic hydrocarbon group having 6 to 10 carbon atoms.

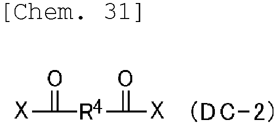

In General Formula (DC-2),
definition and specific examples of R⁴ are the same as R³ in General Formula (DC-1), and
X's are each independently a fluorine atom, a chlorine atom, a bromine atom, an iodine atom, or an active ester group.

In the diamine represented by General Formula [2A], R³ is the same as R³ in the divalent organic group represented by General Formula [2] . The type of R³ is not limited, but for example, in a case where R³ is an alkyl group, examples thereof include linear or branched alkyl groups having 1 to 6 carbon atoms, and among these, an n-butyl group, an s-butyl group, an isobutyl group, a t-butyl group, an n-propyl group, an i-propyl group, an ethyl group, or a methyl group is preferable, and an ethyl group or a methyl group is particularly preferable.

Examples of the diamine represented by General Formula [2A] include diamines having the following structures.

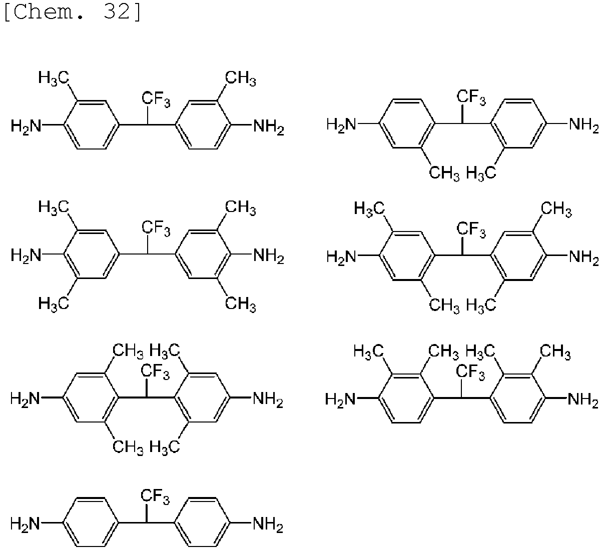

A compound in which X in General Formula (DC-2) is an "active ester group" is obtained, for example, by reacting a dicarboxylic acid and an active esterification agent in the presence of a dehydration condensation agent. Specific examples of a preferred dehydration condensation agent include dicyclohexylcarbodiimide, 1-ethoxycarbonyl-2-ethoxy-1,2-dihydroquinoline, 1,1'-carbonyldioxy-di-1,2,3-benzotriazole, and N,N'-disuccinimidyl carbonate. Examples of a preferred active esterification agent include N-hydroxysuccinimide, 1-hydroxybenzotriazole, N-hydroxy-5-norbornene-2,3-dicarboxylic imide, ethyl 2-hydroxyimino-2-cyanoacetate, and 2-hydroxyimino-2-cyanoacetic acid amide.

Specific examples of the dicarboxylic acid itself or a dicarboxylic acid from which the dicarboxylic acid derivative is aliphatic dicarboxylic acids such as oxalic acid, malonic acid, succinic acid, glutaric acid, adipic acid, pimelic acid, suberic acid, azelaic acid, sebacic acid; aromatic dicarboxylic acids such as phthalic acid, isophthalic acid, terephthalic acid, 3,3'-dicarboxylic diphenyl ether, 3,4-dicarboxylic diphenyl ether, 4,4'-dicarboxylic diphenyl ether, 3,3'-dicarboxylic diphenylmethane, 3,4-dicarboxylic diphenylmethane, 4,4'-dicarboxyldiphenylmethane, 3,3'-dicarboxyldiphenyldifluoromethane, 3,4-dicarboxyldiphenyldifluoromethane, 4,4'-dicarboxyldiphenyldifluoromethane, 3,3'-dicarboxyldiphenylsulfone, 3,4-dicarboxyldiphenylsulfone, 4,4'-dicarboxyldiphenylsulfone, 3,3'-dicarboxyldiphenylsulfide, 3,4-dicarboxyldiphenylsulfide, 4,4'-dicarboxylic diphenyl sulfide, 3,3'-dicarboxylic diphenyl ketone, 3,4-dicarboxylic diphenyl ketone, 4,4'-dicarboxylic diphenyl ketone, 3,3'-dicarboxylic diphenyl methane, 3,4-dicarboxyldiphenylmethane, 4,4'-dicarboxyldiphenylmethane, 2,2-bis(3-carboxyphenyl)propane, 2,2-bis(3,4'-carboxyphenyl)propane, 2,2-bis(4-carboxyphenyl)propane, 2,2-bis(3-carboxyphenyl)hexafluoropropane, 2,2-bis(3,4'-carboxyphenyl)hexafluoropropane, 2,2-bis(4-carboxyphenyl)hexafluoropropane, 1, 3-bis(3-carboxyphenoxy)benzene, 1,4-bis(3-carboxyphenoxy)benzene, 1,4-bis(4-carboxyphenoxy)benzene, 3,3'-(1,4-phenylenebis(1-methylethylidene))bisbenzoic acid, 3,4'-(1,4-phenylenebis(1-methylethylidene))bisbenzoic acid, 4,4'-(1,4-phenylenebis(1-methylethylidene))bisbenzoic acid, 2,2-bis(4-(3-carboxyphenoxy)phenyl)propane, 2,2-bis(4-(4-carboxyphenoxy)phenyl)propane, 2,2-bis(4-(3-carboxyphenoxy) phenyl)hexafluoropropane, 2,2-bis(4-(4-carboxyphenoxy)phenyl)hexafluoropropane, 2,2-bis(4-(3-carboxyphenoxy)phenyl)sulfide, 2,2-bis(4-(4-carboxyphenoxy)phenyl)sulfide, 2,2-bis(4-(3-carboxyphenoxy)phenyl)sulfone, and 2,2-bis(4-(4-carboxyphenoxy)phenyl)sulfone; perfluorononenyloxy group-containing dicarboxylic acids such as 4-(perfluorononenyloxy)phthalic acid, 5-(perfluorononenyloxy)isophthalic acid, 2-(perfluorononenyloxy)terephthalic acid, and 4-methoxy-5-(perfluorononenyloxy)isophthalic acid; and perfluorohexenyloxy group-containing dicarboxylic acids such as 4-(perfluorohexenyloxy)phthalic acid, 5-(perfluorohexenyloxy)isophthalic acid, 2-(perfluorohexenyloxy)terephthalic acid, and 4-methoxy-5-(perfluorohexenyloxy) isophthalic acid.

The dicarboxylic acid or the derivative thereof may be used alone, or two or more thereof may be used in combination.

Particularly preferred dicarboxylic derivatives are as follows.

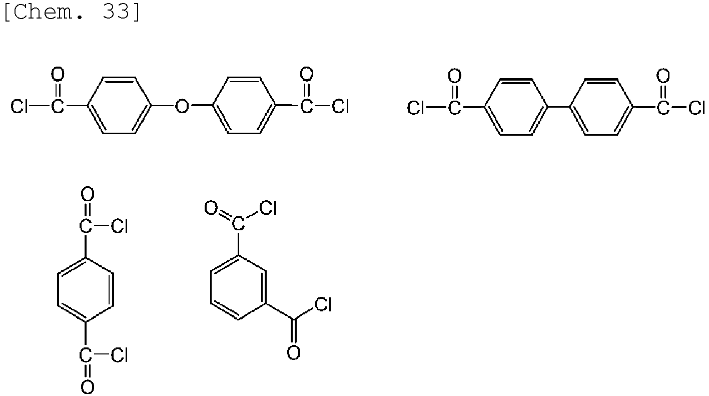

The diamine corresponding to General Formula [2A] and diamines not corresponding to General Formula [2A] (other diamine compounds) may be used in combination. From the viewpoint of its easy availability, examples of the other diamine compounds include o-phenylenediamine, m-phenylenediamine, p-phenylenediamine, 2,4-diaminotoluene, 2,5-diaminotoluene, 4-diamino-m-xylene, 2,4-diaminoxylene, 2,2-bis(4-(4-aminophenyl)hexafluoropropane, and 2,2'-bis(trifluoromethyl)benzidine.
2,2-bis(4-(4-aminophenyl)hexafluoropropane which causes little decrease in transparency is particularly preferable. These may be used alone or in combination of two or more thereof.

The organic solvent which can be used in the polycondensation reaction is not particularly limited as long as it dissolves raw material compounds. Examples of the organic solvent include amide-based, ether-based solvents, aromatic hydrocarbon-based solvents, halogen-based solvents, and lactone-based solvents. Specific examples thereof include N,N-dimethylformamide (DMF), N,N-dimethylacetamide (DMAc), N-methylformamide, hexamethylphosphoric triamide, N-methyl-2-pyrrolidone (NMP), diethyl ether, dipropyl ether, diisopropyl ether, dibutyl ether, cyclopentyl methyl ether, diphenyl ether, dimethoxyethane, diethoxyethane, tetrahydrofuran, dioxane, trioxane, benzene, anisole, nitrobenzene, benzonitrile, chloroform, dichloromethane, 1,2-dichloroethane, 1,1,2,2-tetrachloroethane, γ-butyrolactone, γ-valerolactone, ε-valerolactone, γ-caprolactone, ε-caprolactone, and α-methyl-γ-butyrolactone. These organic solvents may be used alone or in combination of two or more thereof.

After completion of the reaction, for the purpose of removing residual monomers and low-molecular-weight substances, operations such as precipitation, isolation, purification may be performed using a poor solvent such as water or alcohol. The isolated and purified powdery polyamide may be used as it is for some purpose, or the powdery polyamide may be dissolved again in an organic solvent, and a polyamide solution may be prepared (the polyamide solution will be described later) .

### [Production method for polyamide-amic acid and polyamide-imide]

A production method for a polyamide-imide (Formula [1A] described above) according to the present embodiment is not particularly limited. Examples thereof include a production method by reacting a diamine represented by General Formula [2A] with trimellitic anhydride chloride. Definitions or specific examples of n₁, n₂, and R³ are the same as n₁, n₂, and R³ in General Formula [2] .

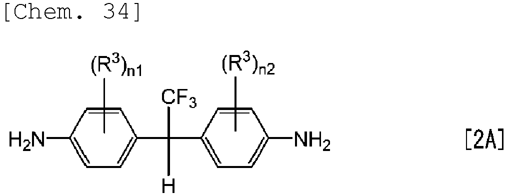

### [Chem. 35]

### [Trimellitic anhydride chloride]

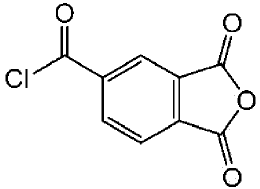

Examples of the production method include a procedure in which
(i) first, the above-described diamine and trimellitic anhydride chloride are polycondensed in an organic solvent to obtain polyamide-amic acid (Formula [1B] described above, and
(ii) the polyamide-amic acid is cyclodehydrated.

The polycondensation reaction of (i) is preferably carried out at -20°C to 80°C. In addition, it is preferable that the diamine and trimellitic anhydride chloride are reacted at a molar ratio of 1:1. Although the reaction time is not particularly limited, it is typically approximately 1 to 24 hours.

The cyclodehydration of (ii) can usually be carried out by heating polyamide-amic acid or a solution thereof to 100°C to 350°C (preferably 120°C to 300°C). Although the heating time is not particularly limited, it is typically approximately 1 hour to 24 hours. In a case where the heating is not carried out or the heating is insufficient, either no polyamide-imide is obtained, or a polymer mixture with a relatively high content of polyamide-amic acid and a relatively low content of polyamide-imide is obtained. On the other hand, in order to sufficiently proceed with the cyclodehydration, an acetic anhydride or a basic catalyst (pyridine or the like) may be added to the system.

The organic solvent which can be used in the polycondensation reaction is not particularly limited as long as it dissolves raw material compounds. Examples of the organic solvent include amide-based, ether-based solvents, aromatic hydrocarbon-based solvents, halogen-based solvents, and lactone-based solvents. Specific examples thereof include N,N-dimethylformamide, N,N-dimethylacetamide (DMAc), N-methylformamide, hexamethylphosphoric triamide, N-methyl-2-pyrrolidone, diethyl ether, dipropyl ether, diisopropyl ether, dibutyl ether, cyclopentyl methyl ether, diphenyl ether, dimethoxyethane, diethoxyethane, tetrahydrofuran, dioxane, trioxane, benzene, anisole, nitrobenzene, benzonitrile, chloroform, dichloromethane, 1,2-dichloroethane, 1,1,2,2-tetrachloroethane, γ-butyrolactone, γ-valerolactone, ε-valerolactone, γ-caprolactone, ε-caprolactone, and α-methyl-γ-butyrolactone. These organic solvents may be used alone or in combination of two or more thereof.

After completion of the reaction, for the purpose of removing residual monomers and low-molecular-weight substances, operations such as precipitation, isolation, purification may be performed using a poor solvent such as water or alcohol. The isolated and purified powdery polyamide-imide and/or polyamide-amic acid may be used as it is for some purpose, or the powdery polyamide may be dissolved again in an organic solvent, and a polymer solution may be prepared (the polymer solution is described below).

### [Solution]

A solution obtained by dissolving the polyamide, polyamide-imide, and/or polyamide-amic acid described above in an organic solvent can be preferably used for a production of an optical film and the like.

The organic solvent is not particularly limited as long as it dissolves the polyamide, polyamide-imide, and polyamide-amic acid according to the present embodiment, and examples thereof include the same types of organic solvents as those described above for organic solvents which can be used in the polycondensation reaction. The organic solvent may be a single solvent or a mixed solvent.

A concentration of the polyamide, polyamide-imide, and/or polyamide-amic acid in the solution may be appropriately adjusted in consideration of a thickness of the optical film to be obtained. The concentration of the polyamide, polyamide-imide, and/or polyamide-amic acid in the solution is typically 0.1% to 50% by mass, preferably 1% to 40% by mass and more preferably 1% to 35% by mass.

Incidentally, the solution may consist of the polyamide, polyamide-imide, and/or polyamide-amic acid and the organic solvent "only", that is, only the resin and the organic solvent, or may contain other optional components. The optional components are added to the solution in order to improve film-forming properties or coatability, and to impart additional functions to the solution. Examples of the optional components include a surfactant, a leveling agent, an antifoaming agent, an antioxidant, and a photosensitizer (quinonediazide-based compound and the like).

However, in a case where the solution is used to prepare an optical film or a substrate for a display device, the solution need not be photosensitive. Therefore, the solution usually does not contain a photosensitizer, or in a case where it contains a photosensitizer, the amount thereof is 1% by mass or less of non-volatile components.

### [Optical film, substrate for display device, and display device]

An optical film or a substrate for a display device can be produced by heat-treating a solution of the above-described polyamide, polyamide-imide, and/or polyamide-amic acid.

Specifically, the optical film or the substrate for a display device can be obtained through:
- coating step of applying the solution of the above-described polyamide, polyamide-imide, and/or polyamide-amic acid to a supporting base material;
- drying step of drying the solvent contained in the applied solution to obtain a resin film; and
- curing step of heat-treating the resin film to form a cured film.

Incidentally, the drying step and the curing step may be separate steps or may be consecutive steps (heating is not interrupted between the drying step and the curing step).

In addition, a display device can be produced by using the optical film or the substrate for a display device.

Hereinafter, each step will be described.

### • Coating step

A coating method used in the coating step is not particularly limited, and a known method can be adopted. Depending on the desired coating thickness, solution viscosity, and the like, a known coating devices such as spin coater, bar coater, doctor blade coater, air knife coater, roll coater, rotary coater, flow coater, die coater, and lip coater can be appropriately used.

The supporting base material is not particularly limited, but an inorganic base material or an organic base material is suitable. Specific examples thereof include glass, a silicon wafer, stainless steel, alumina, copper, nickel, polyethylene terephthalate, polyethylene glycol terephthalate, polyethylene glycol naphthalate, polycarbonate, polyimide, polyamide-imide, polyetherimide, polyetheretherketone, polypropylene, polyether sulfone, polyethylene terephthalate, polyphenylene sulfone, and polyphenylene sulfide.

Among these, from the viewpoint of heat resistance, it is preferable to use an inorganic base material, and it is more preferable to use an inorganic base material such as glass, silicon wafer, and stainless steel.

A coating amount in the coating step can be appropriately adjusted by the concentration of resin components in the solution, the setting of the coating device, and the like. It is preferable that the coating amount is adjusted so that a thickness of a cured film to be finally obtained is 1 µm to 1000 µm, and it is more preferable to be 5 um to 500 um. In a case where the cured film is appropriately thick, strength of the optical film or the substrate for a display device is increased. In addition, in a case where the cured film is not too thick, uniformity (flatness and the like) of the optical film or the substrate for a display device is further improved.

### • Drying step

In the drying step, a resin film is obtained by drying the solvent contained in the solution applied in the coating step.

The temperature for drying the solvent in the drying step depends on the type of the organic solvent, but is preferably 50°C to 250°C, more preferably 80°C to 200°C, still more preferably 100°C to 180°C, and particularly preferably 100°C to 150°C. By setting the temperature to 50°C or higher, the drying can be reliably performed. In addition, by setting the temperature to 250°C or lower, uniformity of the film can be further improved. The time for the drying step is not particularly limited, but can be, for example, 1 minute to 2 hours, specifically 3 minutes to 1 hour.

### • Curing step

In the curing step, the resin film obtained in the drying step is heat-treated to form a cured film. By peeling off the cured film from the supporting base material, an optical film can be obtained. Alternatively, by using an appropriate supporting base material, a substrate for a display device, in which the cured film is formed on the supporting base material, can be obtained.

In the curing step, a cured film is obtained by heat-treating the resin film at a high temperature. In this step, it is expected to remove residual solvent which cannot be removed in the solvent removal step, improve physical properties, and the like. In particular, in a case where the resin film contains the polyamide-amic acid, the heat treatment promotes imide cyclization, and a cured film (containing polyamide-imide) which has very good heat resistance can be obtained.

Incidentally, depending on the curing conditions, the imide cyclization does not proceed completely, and in this case, a cured film (optical film) containing polyamide-imide and polyamide-amic acid is obtained. By adjusting the curing conditions, it is also conceivable to intentionally leave the polyamide-amic acid to adjust physical properties of the film (for example, to increase flexibility).

The curing temperature is preferably 150°C to 400°C and more preferably 200°C to 300°C. By setting the temperature to 150°C or higher, sufficient curing (in some cases, imide cyclization) can be expected. In addition, by setting the temperature to 400°C or lower, it is easy to obtain a uniform and flat cured film.

In the curing step, the temperature may be constant, or may be increased or decreased.

The curing time is not particularly limited, but is usually adjusted to approximately 0.5 hours to 5 hours.

Heating in the curing step is preferably carried out using an inert gas oven, a hot plate, a box-type dryer, or a conveyor-type dryer. Needless to say, it is sufficient that the heating can be carried out without using these devices.

From the viewpoint of preventing oxidation of polyimide and the like, and removing solvents, the heating in the curing step is preferably carried out under an inert gas stream. Examples of the inert gas include nitrogen and argon. A flow rate of the inert gas is desirably 1 L/min to 5 L/min. In a case where the flow rate of the inert gas is slower than 1 L/min, the removal of solvent and curing of the resin film may be insufficient, and in a case of being faster than 5 L/min, only a surface of the resin film is dried, which may cause cracks and the like.

Depending on the use and purpose, in order to obtain a substrate including the polyamide and polyamide-imide according to the present embodiment (hereinafter, may be referred to as a polyamide substrate and a polyamide-imide substrate), a peeling step of peeling off the polyamide film and the polyamide-imide film from the supporting base material after the heating step to obtain the polyamide substrate and the polyamide-imide substrate is required. The peeling step can be performed after cooling from room temperature (20°C) to approximately 400°C after the heating step. In this case, a release agent may be applied to the supporting base material in order to facilitate the peeling. The release agent used in this case is not particularly limited, but silicon-based or fluorine-based release agents can be used.

### [Regarding performance, characteristics, and the like]

The polyamide and the like according to the present embodiment, or the optical film and substrate for a display device including the polyamide and the like tend to have good moldability, transparency, and heat resistance. This is probably largely due to the -C(CF₃)-H group. That is, compared to polyamides having a -C(CF₃)₂- group in the related art, it is considered that the main chain of the polyamide and the like according to the present embodiment is flexible due to one less CF₃ group, and considered that this flexibility leads to good moldability. On the other hand, since the polyamide and the like according to the present embodiment includes at least one CF₃ in the structural unit, it is considered that the cured film has good transparency or heat resistance.

In particular, it is generally difficult to achieve both the flexibility and heat resistance of the resin main chain, but in the present embodiment, by adopting the -C(CF₃)H- group, both the flexibility and heat resistance of the resin main chain can be achieved.

In addition, according to the finding of the present inventors, a polyamide and the like, which are substituted with a substituent such as a methyl group in addition to the -C(CF₃)H- group, exhibits even better transparency. By introducing a substituent such as a methyl group into the main chain structure of the polyamide, it is presumed that interactions which cause coloration such as charge transfer are reduced and good transparency is exhibited.

In addition, the -C(CF₃)H- group has an asymmetric structure. Probably because of this, the polyimide and the like according to the present embodiment are highly soluble in a specific organic solvent, are easy to prepare polyamide and polyamide-imide solution, and are easy to form into a desired film shape.

Furthermore, the polyamide and the polyamide-imide according to the present embodiment, which have the (-C(CF₃)H-) group, tend to have high flexibility and excellent mechanical strength. This is also probably related to the presence of the -C(CF₃)H- group.

With regard to the transparency of the optical film or substrate for a display device according to the present embodiment, at a film thickness of 20 um to 70 µm, the light transmittance at a wavelength of 400 nm is preferably 50% or more and more preferably 70% or more. A higher light transmittance is usually preferred, but from a practical point of view, the upper limit of the light transmittance at a wavelength of 400 nm is, for example, 99%.

### <Heat resistance>

With regard to the heat resistance of the optical film or substrate for a display device according to the present embodiment, a glass transition temperature (hereinafter, may be referred to as Tg) and a 5%-weight-loss temperature (hereinafter, may be referred to as Td₅) can be used as indicators.

From the viewpoint of heat resistance, Tg is preferably 200°C or higher, and from the viewpoint of being able to handle high process temperatures, more preferably 300°C or higher. Td₅ is preferably 300°C or higher and more preferably 350°C or higher. In a case where Td₅ is lower than 200°C, it causes deterioration of the substrate in the device manufacturing process.

Tg can be known by differential scanning calorimetry. In addition, Td₅ can be known by simultaneous differential thermal thermogravimetric measurement. Details of the apparatus and measurement conditions can be referred to Examples.

### [Examples]

Embodiments of the present invention will be described in detail based on Examples and Comparative Examples. It should be noted that the invention is not limited to Examples only.

### <Regarding measurement method>

Identification and measurement of physical properties of the obtained polyamide and the like were carried out by the following methods.

### [Weight-average molecular weight (Mw) and number-average molecular weight (Mn)]

Mw and Mn were measured using gel permeation chromatography (GPC, HLC-8320 manufactured by TOSOH CORPORATION) . Tetrahydrofuran (THF) was used as the mobile phase, and TSKgel SuperHZM-H was used as the column. Alternatively, N,N-dimethylformamide, 30 mmol/L lithium bromide, and 60 mmol/L phosphoric acid were used as the mobile phase, and TSKgel α-M and TSKgel α-2500 were used as the column.

### [Infrared absorption spectrum (IR) measurement]

The infrared absorption spectrum of a compound or compound film was measured using Nicolet NEXUS470FT-IR (manufactured by ThermoFisher Scientific).

### <Synthesis of raw material monomer>

### [Synthesis Example 1 of diamine (synthesis of BIS-A-EF)]

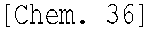

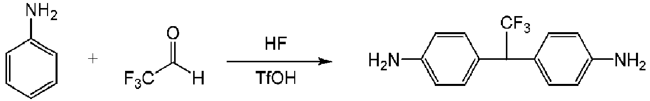

Into a 100 mL stainless steel autoclave reactor equipped with a pressure gauge, a thermometer protection tube, an insert tube, and a stirring motor, 5.3 g (fluoral: 30 mmol, hydrogen fluoride: 0.12 mol) of fluoral-containing mixture (hydrogen fluoride: 44% by mass, hydrogen chloride: 1% by mass, organic matter: 55% by mass) prepared with reference to Japanese Unexamined Patent Publication No. 2018-115146, 9.6 g (0.48 mol) of hydrogen fluoride, 5.6 g (60 mmol) of aniline, and 2.3 g (15 mmol) of trifluoromethanesulfonic acid were charged. The reactor was heated in an oil bath at 150°C, and the reaction solution was reacted for 5 hours at an absolute pressure of 1.3 MPa.

Thereafter, the reaction solution was poured into 100 g of ice, neutralized by adding 70 g of a 48% potassium hydroxide aqueous solution, and organic matter was extracted with 100 g of ethyl acetate . Analysis of the extracted organic layer by gas chromatography showed 96% conversion of aniline.

The organic layer collected by the above-described extraction operation was washed with 50 g of water, and further washed with 50 g of saturated sodium bicarbonate water. Thereafter, the organic layer was collected by a liquid separation operation. The organic layer was concentrated by an evaporator to obtain a desired product 1,1,1-trifluoro-2,2-bis (4-aminophenyl) ethane (may be referred to as "BIS-A-EF") with a yield of 93% and an isomer ratio of 92/8 (2,2-bis(4-aminophenyl) isomer/unidentified).

### [Physical property data]

1,1,1-trifluoro-2,2-bis(4-aminophenyl)ethane:
¹H-NMR (400 MHz, CDCl₃) δ (ppm): 3.42 (4H, s), 4.45 (1H, q, J = 10.1 Hz), 6.62 (4H, d, J = 8.3 Hz), 7.12 (4H, d, J = 8.3 Hz)
¹⁹F-NMR (400 MHz, CDCl₃, CFCl₃) δ (ppm): -66.9 (3F, d, J = 11.5 Hz)

### [Synthesis Example 2 of diamine (synthesis of BIS-3-AT-EF)]

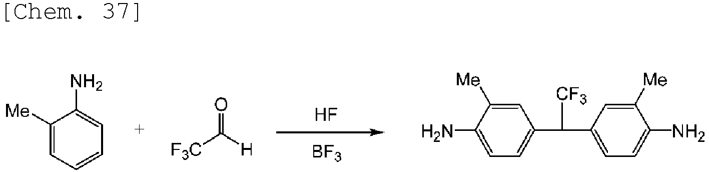

Into a 100 mL stainless steel autoclave reactor equipped with a pressure gauge, a thermometer protection tube, an insert tube, and a stirring motor, 15.9 g (fluoral: 90 mmol, hydrogen fluoride: 0.36 mol) of fluoral-containing mixture (hydrogen fluoride: 44% by mass, hydrogen chloride: 1% by mass, organic matter: 55% by mass) prepared with reference to Japanese Unexamined Patent Publication No. 2018-115146, 28.8 g (1.44 mol) of hydrogen fluoride, 19.5 g (0.18 mol) of 2-toluidine, and 3.0 g (45 mmol) of boron trifluoride were charged. The reactor was heated in an oil bath at 150°C, and the reaction solution was reacted for 5 hours at an absolute pressure of 1.3 MPa.

Thereafter, the reaction solution was poured into 300 g of ice, neutralized by adding 210 g of a 48% potassium hydroxide aqueous solution, and organic matter was extracted with 300 g of ethyl acetate . Analysis of the extracted organic layer by gas chromatography showed 98% conversion of 2-toluidine.

The organic layer collected by the above-described extraction operation was washed with 150 g of water, and further washed with 150 g of saturated sodium bicarbonate water. Thereafter, the organic layer was collected by a liquid separation operation. The organic layer was concentrated by an evaporator to obtain a desired product 1,1,1-trifluoro-2,2-bis(3-methyl-4-aminophenyl)ethane with a yield of 96% and an isomer ratio of 96/4 in a form of crude crystals.

Into a 200 mL glass reactor equipped with a thermometer protection tube and a stirring motor, 25 g of the obtained crude crystals and 75 g of toluene were charged, and heated to 90°C to dissolve completely. 50 g of heptane was added dropwise thereto over 1 hour to precipitate crystals. After the temperature was lowered to 30°C, the crystals collected by filtration were dried with an evaporator to obtain a desired product
1,1,1-trifluoro-2,2-bis(3-methyl-4-aminophenyl)ethane (may be referred to as "BIS-3-AT-EF") with a yield of 87%, a purity of 99.8%, and an isomer ratio of 99% or more (2,2-bis(3-methyl-4-aminophenyl) isomer).

### [Physical property data]

1,1,1-trifluoro-2,2-bis(3-methyl-4-aminophenyl)ethane:
¹H-NMR (400 MHz, CDCl₃) δ (ppm) : 2.13 (6H, s), 3.14 (4H, s), 4.41 (1H, q, J = 10.4 Hz), 6.62 (2H, d, J = 10.4 Hz), 7.01 (2H, s), 7.02 (2H, d, J = 8.3 Hz)
¹⁹F-NMR (400 MHz, CDCl₃, CFCl₃) δ (ppm): -66.7 (3F, d, J = 11.5 Hz)

### [Synthesis Example 3 of diamine (synthesis of BIS-2-AT-EF)]

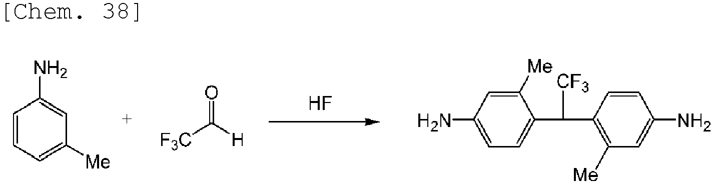

Into a 100 mL stainless steel autoclave reactor equipped with a pressure gauge, a thermometer protection tube, an insert tube, and a stirring motor, 5.3 g (fluoral: 30 mmol, hydrogen fluoride: 0.12 mol) of fluoral-containing mixture (hydrogen fluoride: 44% by mass, hydrogen chloride: 1% by mass, organic matter: 55% by mass) prepared with reference to Japanese Unexamined Patent Publication No. 2018-115146, 9.6 g (0.48 mol) of hydrogen fluoride, and 6.5 g (60 mmol) of 3-toluidine were charged. The reactor was heated in an oil bath at 150°C, and the reaction solution was reacted for 5 hours at an absolute pressure of 1.3 MPa.

Thereafter, the reaction solution was poured into 100 g of ice, neutralized by adding 70 g of a 48% potassium hydroxide aqueous solution, and organic matter was extracted with 100 g of ethyl acetate . Analysis of the extracted organic layer by gas chromatography showed 83% conversion of 3-toluidine.

The organic layer collected by the above-described extraction operation was washed with 50 g of water, and further washed with 50 g of saturated sodium bicarbonate water. Thereafter, the organic layer was collected by a liquid separation operation. The organic layer was concentrated by an evaporator to obtain a desired product 1,1,1-trifluoro-2,2-bis(2-methyl-4-aminophenyl)ethane (may be referred to as "BIS-2-AT-EF") with a yield of 71% and an isomer ratio of 97/2/1 (2,2-bis(2-methyl-4-aminophenyl) isomer/unidentified/unidentified) .

### [Physical property data]

1,1,1-trifluoro-2,2-bis(2-methyl-4-aminophenyl)ethane:
¹H-NMR (400 MHz, CDCl₃) δ (ppm): 2.21 (6H, s), 3.58 (4H, bs), 4.83 (1H, q, J = 9.6 Hz), 6.48 (2H, s), 6.50 (2H, d, J = 9.4 Hz), 7.17 (2H, d, J = 8.7 Hz)
¹⁹F-NMR (400 MHz, CDCl₃, CFCl₃) δ (ppm): -65.6 (3F, d, J = 11.6 Hz)

### [Synthesis Example 4 of diamine (synthesis of BIS-3,5-AX-EF)]

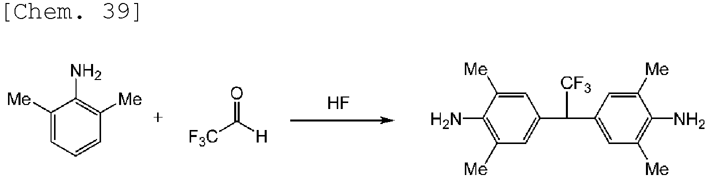

Into a 100 mL stainless steel autoclave reactor equipped with a pressure gauge, a thermometer protection tube, an insert tube, and a stirring motor, 5.3 g (fluoral: 30 mmol, hydrogen fluoride: 0.12 mol) of fluoral-containing mixture (hydrogen fluoride: 44% by mass, hydrogen chloride: 1% by mass, organic matter: 55% by mass) prepared with reference to Japanese Unexamined Patent Publication No. 2018-115146, 9.6 g (0.48 mol) of hydrogen fluoride, and 7.3 g (60 mmol) of 2,6-xylidine were charged. The reactor was heated in an oil bath at 150°C, and the reaction solution was reacted for 5 hours at an absolute pressure of 1.3 MPa.

Thereafter, the reaction solution was poured into 100 g of ice, neutralized by adding 70 g of a 48% potassium hydroxide aqueous solution, and organic matter was extracted with 100 g of ethyl acetate . Analysis of the extracted organic layer by gas chromatography showed 99% conversion of 2,6-xylidine.

The organic layer collected by the above-described extraction operation was washed with 50 g of water, and further washed with 50 g of saturated sodium bicarbonate water. Thereafter, the organic layer was collected by a liquid separation operation. The organic layer was concentrated by an evaporator to obtain a desired product 1,1,1-trifluoro-2,2-bis(3,5-dimethyl-4-aminophenyl)ethane (may be referred to as "BIS-3,5-AX-EF"), which is represented by Formula [4], with a yield of 95% and an isomer ratio of 97/3 (2,2-bis(3,5-dimethyl-4-aminophenyl) isomer/unidentified).

### [Physical property data]

1,1,1-trifluoro-2,2-bis(3,5-dimethyl-4-aminophenyl)ethane:
¹H-NMR (400 MHz, CDCl₃) δ (ppm): 2.15 (12H, s), 3.55 (4H, s), 4.36 (1H, q, J = 10.4 Hz), 6.62 (2H, d, J = 10.4 Hz), 6.93 (4H, s)
¹⁹F-NMR (400 MHz, CDCl₃, CFCl₃) δ (ppm): -66.6 (3F, d, J = 8.6 Hz)

### [Synthesis Example 5 of diamine (synthesis of BIS-2,5-AX-EF)]

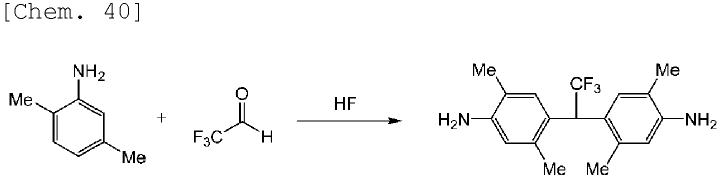

Into a 100 mL stainless steel autoclave reactor equipped with a pressure gauge, a thermometer protection tube, an insert tube, and a stirring motor, 5.3 g (fluoral: 30 mmol, hydrogen fluoride: 0.12 mol) of fluoral-containing mixture (hydrogen fluoride: 44% by mass, hydrogen chloride: 1% by mass, organic matter: 55% by mass) prepared with reference to Japanese Unexamined Patent Publication No. 2018-115146, 9.6 g (0.48 mol) of hydrogen fluoride, and 7.3 g (60 mmol) of 2,5-xylidine were charged. The reactor was heated in an oil bath at 150°C, and the reaction solution was reacted for 5 hours at an absolute pressure of 1.3 MPa.

Thereafter, the reaction solution was poured into 100 g of ice, neutralized by adding 70 g of a 48% potassium hydroxide aqueous solution, and organic matter was extracted with 100 g of ethyl acetate . Analysis of the extracted organic layer by gas chromatography showed 98% conversion of 2,5-xylidine.

The organic layer collected by the above-described extraction operation was washed with 50 g of water, and further washed with 50 g of saturated sodium bicarbonate water. Thereafter, the organic layer was collected by a liquid separation operation. The organic layer was concentrated by an evaporator to obtain a desired product 1,1,1-trifluoro-2,2-bis(2,5-dimethyl-4-aminophenyl)ethane (may be referred to as "BIS-2,5-AX-EF") with a yield of 94% and an isomer ratio of 99/1 (2,2-bis(2,5-dimethyl-4-aminophenyl) isomer/unidentified) .

### [Physical property data]

1,1,1-trifluoro-2,2-bis(2,5-dimethyl-4-aminophenyl)ethane:
¹H-NMR (400 MHz, CDCl₃) δ (ppm) : 2.12 (6H, s), 2.19 (6H, s), 3.53 (4H, bs), 4.80 (1H, q, J = 9.6 Hz), 6.45 (2H, s, 7.04 (2H, s)
¹⁹F-NMR (400 MHz, CDCl₃, CFCl₃) δ (ppm) : -65.5 (3F, d, J = 8.7 Hz)

### [Synthesis Example 6 of diamine (synthesis of BIS-2,3-AX-EF)]

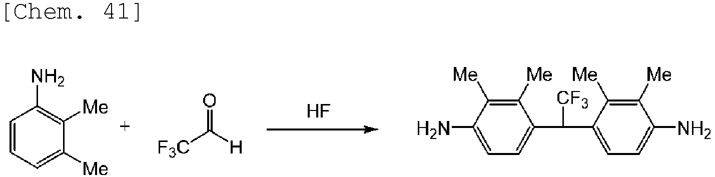

Into a 100 mL stainless steel autoclave reactor equipped with a pressure gauge, a thermometer protection tube, an insert tube, and a stirring motor, 15.5 g (fluoral: 82 mmol, hydrogen fluoride: 0.37 mol) of fluoral-containing mixture (hydrogen fluoride: 48% by mass, hydrogen chloride: less than 0.1% by mass, organic matter: 52% by mass) prepared with reference to Japanese Unexamined Patent Publication No. 2018-115146, 12.4 g (0.62 mol) of hydrogen fluoride, and 20 g (165 mmol) of 2,3-xylidine were charged. The reactor was heated in an oil bath at 150°C, and the reaction solution was reacted for 18 hours at an absolute pressure of 0.55 MPa.

Thereafter, the reaction solution was poured into 100 g of ice, neutralized by adding 116 g of a 48% potassium hydroxide aqueous solution, and organic matter was extracted with 100 g of ethyl acetate . Analysis of the extracted organic layer by gas chromatography showed 90% conversion of 2,3-xylidine.

The organic layer collected by the above-described extraction operation was washed with 50 g of water, and further washed with 50 g of saturated sodium bicarbonate water. Thereafter, the organic layer was collected by a liquid separation operation. The organic layer was concentrated by an evaporator to obtain a desired product 1,1,1-trifluoro-2,2-bis(2,3-dimethyl-4-aminophenyl)ethane (may be referred to as "BIS-2,3-AX-EF") with a yield of 77% and an isomer ratio of 99/1 (2,2-bis(2,3-dimethyl-4-aminophenyl) isomer/unidentified) .

### [Physical property data]

1,1,1-trifluoro-2,2-bis(2,3-dimethyl-4-aminophenyl)ethane:
¹H-NMR (400 MHz, CDCl₃) δ (ppm) : 2.10 (6H, s), 2.18 (6H, s), 4.19 (4H, bs), 5.01 (1H, q, J = 9.6 Hz), 6.59 (2H, d, J = 8.4 Hz), 7.07 (2H, d, J = 8.4 Hz)
¹⁹F-NMR (400 MHz, CDCl₃, CFCl₃) δ (ppm) : -64.6 (3F, d, J = 9.2 Hz)

### [Synthesis Example 7 of diamine (synthesis of BIS-A-A): for Comparative Example]

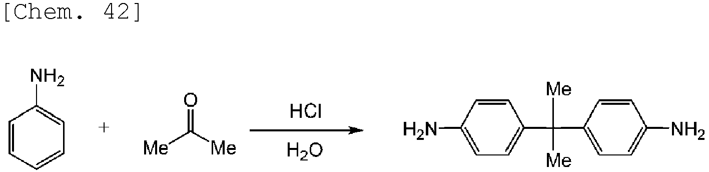

With reference to Japanese Unexamined Patent Publication No. 2012-140345, into a 1 L stainless steel autoclave reactor equipped with a pressure gauge, a thermometer protection tube, an insert tube, and a stirring motor, 500.3 g (3.86 mol) of aniline hydrochloride, 199.1 g of water, and 80.0 g (1.38 mol) of acetone were charged. The reactor was heated in an oil bath at 190°C, and the reaction solution was reacted for 5 hours at an absolute pressure of 1.3 MPa.

Thereafter, the reaction solution was poured into 206 g of water, neutralized by adding 322 g (3.86 mol) of a 48% sodium hydroxide aqueous solution, and an organic layer was extracted with 2 kg of ethyl acetate. The organic layer collected by the extraction operation was washed with 1 kg of water, and collected by a liquid separation operation. The organic layer was concentrated by an evaporator to obtain a reaction crude product.

The obtained reaction crude product was charged into a 1 L glass distillation apparatus equipped with a stirrer, a thermometer protection tube, and a vacuum distillation device. The pressure was reduced to an absolute pressure of 50 kPa, and the reaction crude product was heated in an oil bath at 90°C for 1 hour to distill off low-boiling components including ethyl acetate. Furthermore, while raising the temperature to 170°C over 3 hours, the pressure was reduced to an absolute pressure of 0.1 kPa to distill off components having a boiling point lower than that of 2,2-bis(4-aminophenyl)propane.

Thereafter, the temperature was lowered to 90°C, 200 g of toluene and 100 g of heptane were added thereto, and the mixture was cooled to room temperature over 2 hours to precipitate a solid. 126.9 g of a brown solid was collected by suction filtration. The collected brown solid was mixed with 300 g of toluene, heated in an oil bath at 100°C to dissolve, and cooled to room temperature over 3 hours to precipitate a white solid. The solid collected by the suction filtration was dried with an evaporator to obtain a desired product 2,2-bis (4-aminophenyl)propane (may be referred to as "BIS-A-A") with a yield of 19% and a purity of 99%.

### <Production (synthesis) of polyamide and the like, and production of cured film>

### [Example 1]

Into a 500 mL three-necked flask equipped with a nitrogen inlet tube and a stirrer, 10 g (38 mmol) of 1,1,1-trifluoro-2,2-bis(4-aminophenyl)ethane (BIS-A-EF) which was prepared in Synthesis Example 1 described above, 7.6 g (38 mmol) of terephthaloyl chloride (hereinafter, may be referred to as TPC), and 6.1 g (77 mmol) of pyridine were charged, and 120 g of dimethylacetamide (hereinafter, may be referred to as DMAc) as an organic solvent was further added thereto. Thereafter, the mixture was stirred at 10°C for 2 hours in a nitrogen atmosphere to carry out a polycondensation reaction to prepare a polyamide solution. As a result of GPC measurement of the prepared solution, Mw was 156000 and Mw/Mn was 4.1.

The obtained polyamide solution was applied to a glass substrate using a spin coater, and then dried at 130°C for 30 minutes. Thereafter, the obtained polyamide solution was continuously heated at 200°C for 1 hour and then at 250°C for 2 hours while gradually increasing the temperature, thereby obtaining a cured film on the glass substrate. The film thickness of the cured film was 21 um. From the results of IR spectrum measurement, it was confirmed that absorbances characteristic of amide groups were found at 1652 cm⁻¹ and 1602 cm⁻¹, and the cured film included polyamide.

For reference, the reaction scheme is shown below.

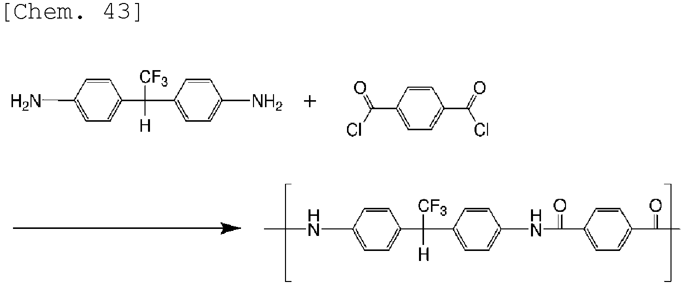

### [Example 2]

Into a 500 mL three-necked flask equipped with a nitrogen inlet tube and a stirrer, 20 g (75 mmol) of 1,1,1-trifluoro-2,2-bis(4-aminophenyl)ethane (BIS-A-EF) which was prepared in Synthesis Example 1 described above, 22 g (75 mmol) of 4,4'-oxydibenzoyl chloride (hereinafter, may be referred to as OBBC), and 12 g (152 mmol) of pyridine were charged, and 85 g of dimethylacetamide (DMAc) as an organic solvent was further added thereto. Thereafter, the mixture was stirred at 10°C for 2 hours in a nitrogen atmosphere to carry out a polycondensation reaction to prepare a polyamide solution. As a result of GPC measurement of the prepared solution, Mw was 180000 and Mw/Mn was 8.5.

The obtained polyamide solution was applied to a glass substrate using a spin coater, and then continuously heated at 130°C for 30 minutes, at 200°C for 1 hour, and at 250°C for 2 hours while gradually increasing the temperature, thereby obtaining a cured film on the glass substrate. The film thickness of the cured film was 22 um. From the results of IR spectrum measurement, it was confirmed that absorbances characteristic of amide groups were found at 1649 cm⁻¹ and 1603 cm⁻¹, and the cured film included polyamide.

For reference, the reaction scheme is shown below.

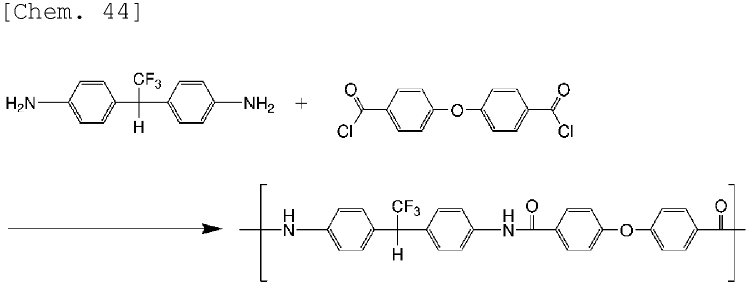

### [Example 3]

Into a 500 mL three-necked flask equipped with a nitrogen inlet tube and a stirrer, 15 g (47 mmol) of 1,1,1-trifluoro-2,2-bis(2,5-dimethyl-4-aminophenyl)ethane (BIS-2,5-AX-EF) which was prepared in Synthesis Example 5 described above, 9.4 g (47 mmol) of TPC, and 7.5 g (95 mmol) of pyridine were charged, and 85 g of dimethylacetamide (DMAc) as an organic solvent was further added thereto. Thereafter, the mixture was stirred at 10°C for 2 hours in a nitrogen atmosphere to carry out a polycondensation reaction to prepare a polyamide solution. As a result of GPC measurement of the prepared solution, Mw was 83000 and Mw/Mn was 2.7.

The obtained polyamide solution was applied to a glass substrate using a spin coater, and then continuously heated at 130°C for 30 minutes, at 200°C for 1 hour, and at 250°C for 2 hours while gradually increasing the temperature, thereby obtaining a cured film on the glass substrate. The film thickness of the cured film was 23 um. From the results of IR spectrum measurement, it was confirmed that absorbances characteristic of amide groups were found at 1650 cm⁻¹ and 1605 cm⁻¹, and the cured film included polyamide.

For reference, the reaction scheme is shown below.

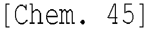

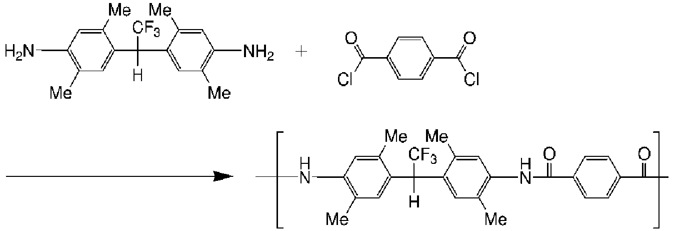

### [Example 4]

Into a 500 mL three-necked flask equipped with a nitrogen inlet tube and a stirrer, 15 g (47 mmol) of 1,1,1-trifluoro-2,2-bis(3,5-dimethyl-4-aminophenyl)ethane (BIS-3,5-AX-EF) which was prepared in Synthesis Example 4 described above, 9.4 g (47 mmol) of TPC, and 7.5 g (95 mmol) of pyridine were charged, and 80 g of dimethylacetamide (DMAc) as an organic solvent was further added thereto. Thereafter, the mixture was stirred at 10°C for 2 hours in a nitrogen atmosphere to carry out a polycondensation reaction to prepare a polyamide solution. As a result of GPC measurement of the prepared solution, Mw was 42000 and Mw/Mn was 1.8.

The obtained polyamide solution was applied to a glass substrate using a spin coater, and then continuously heated at 130°C for 30 minutes, at 200°C for 1 hour, and at 250°C for 2 hours while gradually increasing the temperature. Thus, a cured film was obtained on the glass substrate. The thickness of the cured film was 21 um. From the results of IR spectrum measurement, it was confirmed that absorbances characteristic of amide groups were found at 1655 cm⁻¹ and 1622 cm⁻¹, and the cured film included polyamide.

For reference, the reaction scheme is shown below.

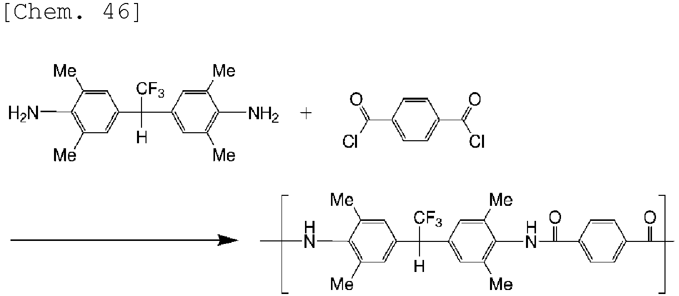

### [Example 5]

Into a 500 mL three-necked flask equipped with a nitrogen inlet tube and a stirrer, 20 g (68 mmol) of 1,1,1-trifluoro-2,2-bis(3-methyl-4-aminophenyl)ethane (BIS-3-AT-EF) which was prepared in Synthesis Example 2 described above, 20 g (68 mmol) of 4,4'-oxydibenzoyl chloride (OBBC), and 11 g (14 mmol) of pyridine were charged, and 150 g of dimethylacetamide (DMAc) as an organic solvent was further added thereto. Thereafter, the mixture was stirred at 10°C for 2 hours in a nitrogen atmosphere to carry out a polycondensation reaction to prepare a polyamide solution. As a result of GPC measurement of the prepared solution, Mw was 164000 and Mw/Mn was 3.5.

The obtained polyamide solution was applied to a glass substrate using a spin coater, and then continuously heated at 130°C for 30 minutes, at 200°C for 1 hour, and at 250°C for 2 hours while gradually increasing the temperature, thereby obtaining a film on the glass substrate. The film thickness thereof was 25 um. From the results of IR spectrum measurement, it was confirmed that absorbances characteristic of amide groups were found at 1645 cm⁻¹ and 1608 cm⁻¹, and the polyamide was included.

For reference, the reaction scheme is shown below.

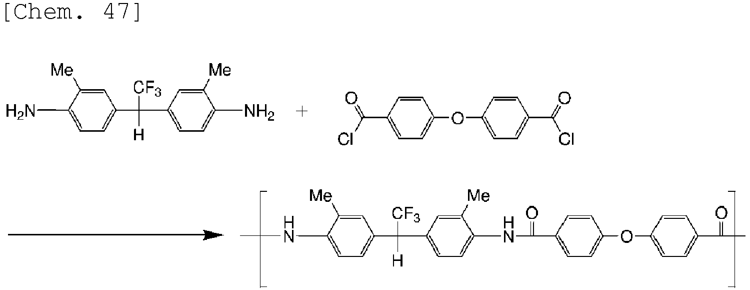

### [Example 6]

Into a 500 mL three-necked flask equipped with a nitrogen inlet tube and a stirrer, 20 g (75 mmol) of 1,1,1-trifluoro-2,2-bis(4-aminophenyl)ethane (BIS-A-EF) which was prepared in Synthesis Example 1 described above and 15.8 g (75 mmol) of trimellitic anhydride chloride (hereinafter, may be referred to as TMAC) were charged, and 125 g of dimethylacetamide (DMAc) as an organic solvent was added thereto. Thereafter, the mixture was stirred at 10°C for 2 hours in a nitrogen atmosphere to obtain a polyamide-amic acid solution. 6.2 g (79 mmol) of pyridine and 8.1 g (79 mmol) of acetic anhydride were added to the obtained reaction solution, and imidization was performed by stirring the mixture at room temperature (20°C) for 3 hours in a nitrogen atmosphere. Thereafter, DMAc was added thereto to dilute the reaction solution, and pressure filtration was performed to prepare a polyamide-imide solution. As a result of GPC measurement of the prepared solution, Mw was 210000 and Mw/Mn was 12.8.

The obtained polyamide-imide solution was applied to a glass substrate using a spin coater, and then continuously heated at 130°C for 30 minutes, at 200°C for 1 hour, and at 250°C for 2 hours while gradually increasing the temperature. Thus, a cured film was obtained on the glass substrate. The film thickness thereof was 23 um. From the results of IR spectrum measurement, it was confirmed that absorbances characteristic of amide groups and imide were found at 1786 cm⁻¹, 1719 cm⁻¹, 1676 cm⁻¹, and 1605 cm⁻¹, and the cured film included polyamide-imide.

For reference, the reaction scheme is shown below.

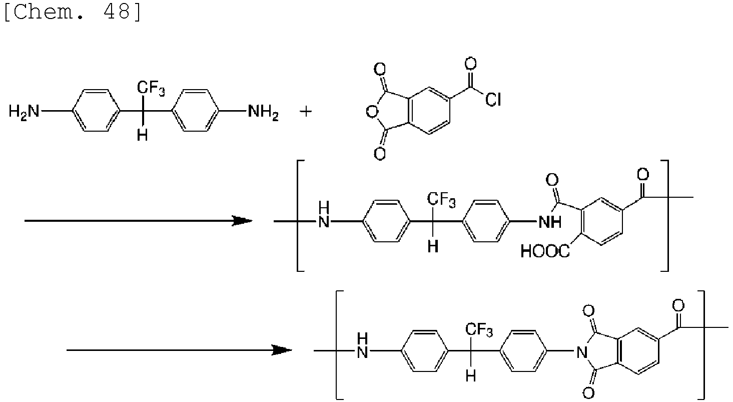

### [Example 7]

Into a 500 mL three-necked flask equipped with a nitrogen inlet tube and a stirrer, 20 g (68 mmol) of 1,1,1-trifluoro-2,2-bis(3-methyl-4-aminophenyl)ethane (BIS-3-AT-EF) which was prepared in Synthesis Example 2 described above and 14.3 g (68 mmol) of trimellitic anhydride chloride (hereinafter, may be referred to as TMAC) were charged, and 119 g of dimethylacetamide (DMAc) as an organic solvent was added thereto. Thereafter, the mixture was stirred at 10°C for 2 hours in a nitrogen atmosphere to proceed the reaction and obtain a polyamide-amic acid solution.

The obtained polyamide-amic acid solution was applied to a glass substrate using a spin coater, and then continuously heated at 130°C for 30 minutes, at 200°C for 1 hour, and at 250°C for 2 hours while gradually increasing the temperature. Thus, a cured film was obtained on the glass substrate. The film thickness thereof was 30 um. From the results of IR spectrum measurement, it was confirmed that absorbances characteristic of amide groups and imide were found at 1786 cm⁻¹, 1720 cm⁻¹, 1676 cm⁻¹, and 1604 cm⁻¹, and the cured film included polyamide-imide (that the polyamide-amic acid caused a ring closure reaction on the glass substrate to form an imide ring).

For reference, the reaction scheme is shown below.

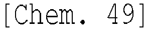

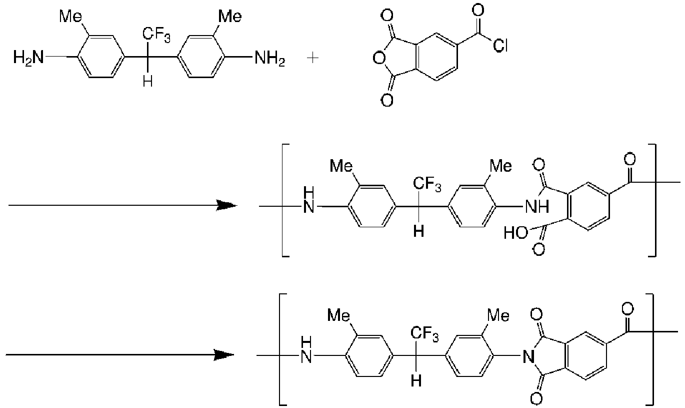

### [Comparative Example 1]

Into a 500 mL three-necked flask equipped with a nitrogen inlet tube and a stirrer, 10 g (50 mmol) of 4,4'-diaminodiphenylmethane (MDA), 10.2 g (50 mmol) of TPC, and 4.2 g (53 mmol) of pyridine were charged, and 82 g of dimethylacetamide (hereinafter, may be referred to as DMAc) as an organic solvent was further added thereto. Thereafter, the mixture was stirred at 10°C for 2 hours in a nitrogen atmosphere, but the reaction solution gelated and a "solution" of polyamide could not be obtained. Therefore, the film-forming properties could not be confirmed.

For reference, the reaction scheme is shown below.

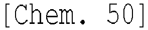

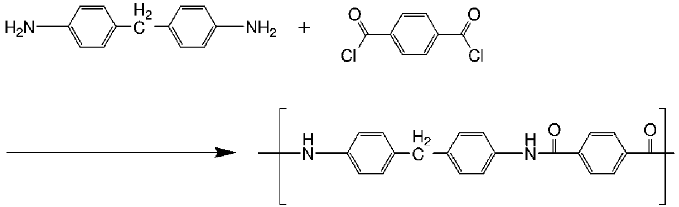

### [Comparative Example 2]

Into a 500 mL three-necked flask equipped with a nitrogen inlet tube and a stirrer, 9.0 g (40 mmol) of 2,2-bis(4-aminophenyl)propane (BIS-A-A) which was prepared in Synthesis Example 7 described above, 8.1 g (40 mmol) of TPC, and 6.4 g (82 mmol) of pyridine were charged, and 47 g of dimethylacetamide (hereinafter, may be referred to as DMAc) as an organic solvent was further added thereto. Thereafter, the mixture was stirred at 10°C for 2 hours in a nitrogen atmosphere to proceed a polycondensation reaction to prepare a polyamide solution. As a result of GPC measurement of the prepared solution, Mw was 54000 and Mw/Mn was 3.1.

The obtained polyamide solution was applied to a glass substrate using a spin coater, and then continuously heated at 130°C for 30 minutes, at 200°C for 1 hour, and at 250°C for 2 hours while gradually increasing the temperature. Thus, a cured film was obtained on the glass substrate. The film thickness of the cured film was 20 um. From the results of IR spectrum measurement, it was confirmed that absorbances characteristic of amide groups were found at 1650 cm⁻¹ and 1601 cm⁻¹, and the cured film included polyamide.

For reference, the reaction scheme is shown below.

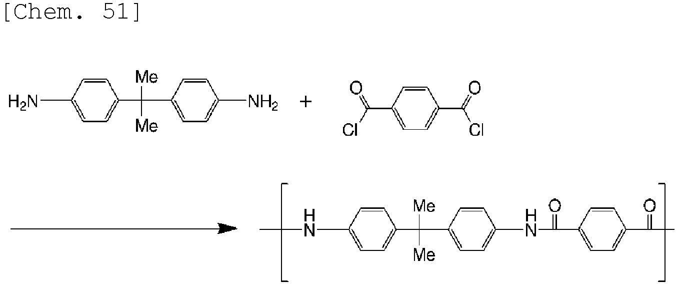

### [Comparative Example 3]

Into a 500 mL three-necked flask equipped with a nitrogen inlet tube and a stirrer, 16 g (50 mmol) of 2,2'-bis(trifluoromethyl)benzene (hereinafter, may be referred to as ABL21), 10.2 g (50 mmol) of TPC, and 4.2 g (53 mmol) of pyridine were charged, and 82 g of dimethylacetamide (DMAc) as an organic solvent was further added thereto. Thereafter, the mixture was stirred at 10°C for 2 hours in a nitrogen atmosphere, but the reaction solution gelated and a "solution" of polyamide could not be obtained. Therefore, the film-forming properties could not be confirmed.

For reference, the reaction scheme is shown below.

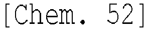

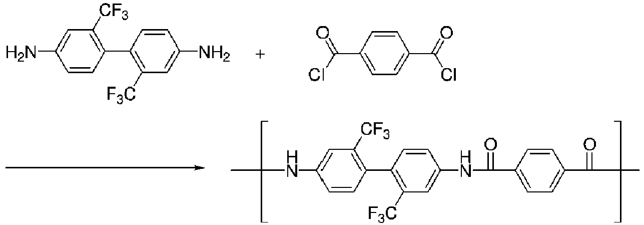

### <Performance evaluation: solvent solubility and processability>

Solvent solubility and processability of the polyamides and polyamide-imides obtained in Examples and Comparative Examples were evaluated as follows.
(1) Each solvent (DMAc, NMP, or DMF) was added to the polyamide and polyamide-imide solutions (solid content concentration was sufficiently greater than 2% by mass) obtained in Examples and Comparative Examples to prepare liquids having a polymer solid content concentration of 2% by mass.
(2) The prepared solution was shaken at a constant temperature of 100 rpm in a water bath at 30°C for 1 hour, using a constant temperature shaking water tank manufactured by TOKYO RIKAKIKAI CO., LTD., model name "UNI THERMO SHAKER NTS-1300".
(3) The presence of solid matter in the liquid after stirring was visually confirmed. The solvent solubility was evaluated as "Good" in a case where the solid matter was absent in any of DMAc, NMP, and DMF, and the solvent solubility was evaluated as "Poor" in a case where the solid matter was present in one or more of DMAc, NMP, and DMF. Incidentally, in a case where the solvent solubility could not be evaluated properly because the obtained polymer was gelated in the first place, it was described as "Gelation" in the table below.
(4) The liquid after stirring in (2) above was applied to a substrate to form a film, and it was visually confirmed whether or not a film having a uniform thickness could be obtained. The film-forming properties were evaluated as "Good" in a case where uniform films were obtained in all of DMAc, NMP and DMF, and the film-forming properties were evaluated as "Poor" in a case where non-uniform films were obtained in one or more of DMAc, NMP, or DMF. The results are summarized in the table below.

**[Table 1]**

| Example No. | Diamine | Monomer | Solvent solubility | Film-forming properties |
|---|---|---|---|---|
| Example 1 | BIS-A-EF | TPC | Good | Good |
| Example 2 | BIS-A-EF | OBBC | Good | Good |
| Example 3 | BIS-2, 5-AX-EF | TPC | Good | Good |
| Example 4 | BIS-3,5-AX-EF | TPC | Good | Good |
| Example 5 | BIS-3-AT-EF | OBBC | Good | Good |
| Example 6 | BIS-A-EF | TMAC | Good | Good |
| Comparative Example 1 | MDA | TPC | Gelation | Poor |
| Comparative Example 3 | ABL21 | TPC | Gelation | Poor |

In Examples 1 to 6, the obtained polyamide and polyamide-imide were all soluble in organic solvents such as DMAc, NMP, and DMF. In addition, in Examples 1 to 6, the film-forming properties were good. These good results are speculated to be related to the asymmetric skeleton of the -C(CF₃)H- group.

### <Performance evaluation: transparency and heat resistance>

For the cured films formed of the polyamides obtained in Examples 1, 3, and 4 and Comparative Example 2, transparency was evaluated by measuring light transmittance (T400) at a wavelength of 400 nm, and heat resistance was evaluated by measuring glass transition temperature and 5%-weight-loss temperature (Td₅). Specific evaluation methods are as follows.

### [Transparency]

Using the cured films obtained in Examples and Comparative Examples, a light transmittance (T400) at a wavelength of 400 nm was measured with an ultraviolet-visible-near-infrared spectrophotometer (UV-VIS-NIR SPECTROMETER model name UV-3150) manufactured by Shimadzu Corporation. It can be said that, as T400 is larger, the transparency is higher.

### [Heat resistance]

The glass transition temperature (Tg) was measured with a differential scanning calorimeter (manufactured by Hitachi High-Tech Science Corporation, model name: DSC7000). Specifically, in the following temperature profiles (1) to (3), Tg was defined as the temperature at which the differential scanning calorific value change during the temperature rise in (3) reached a maximum.
(1) heating up to 400°C at a heating rate of 10°C/min
(2) cooling up to -40°C at a cooling rate of -10°C/min
(3) after that, heating again up to 400°C at a heating rate of 10 °C/min

For the 5%-weight-loss temperature (Td₅), with a simultaneous differential thermal thermogravimetric measurement device (manufactured by Hitachi High-Tech Science Corporation, model name: STA7200), thermogravimetric measurement was performed at a heating rate of 10 °C/min, and the temperature at which 5% weight loss relative to the initial weight occurred was defined as Td₅.

The results are summarized in the table below.

**[Table 2]**

| Example No. | Diamine | Monomer | T400 [%] | Tg [°C] | Td₅ [°C] |
|---|---|---|---|---|---|
| Example 1 | BIS-A-EF | TPC | 71 | 301 | 361 |
| Example 3 | BIS-2,5-AX-EF | TPC | 77 | 304 | 399 |
| Example 4 | BIS-3,5-AX-EF | TPC | 79 | 299 | 368 |
| Comparative Example 2 | BIS-A-A | TPC | 32 | - | - |

Examples 1, 3, and 4 had larger values of T400 than Comparative Example 2. In addition, Examples 1, 3, and 4 had sufficiently large values of Tg and Td₅. There results showed that the polyamide according to the present embodiment has excellent transparency and heat resistance. From such properties, it is understood that the cured film including the polyamide and the like according to the present embodiment is preferably applied to an optical film, a substrate for a display device, and the like.

From the more detailed analysis of Table 2, Examples 3 and 4 using a diamine having a methyl group in the aromatic group had a higher transmittance than Example 1.

Priority is claimed on Japanese Patent Application No. 2020-119697, filed July 13, 2020, the disclosure of which is incorporated herein by reference.

## Claims

1. A polyamide comprising:
a structural unit represented by General Formula [1], 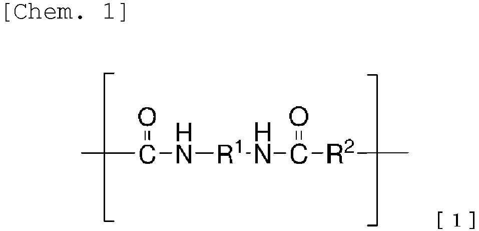
in General Formula [1],
R¹ is a divalent organic group represented by General Formula [2], and
R² is a divalent organic group, 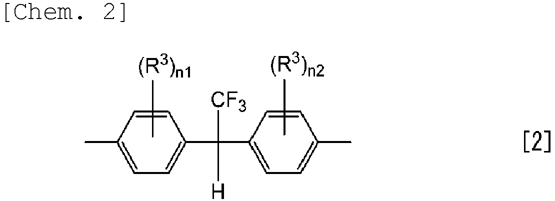
in General Formula [2],
n₁ and n₂ are each independently an integer of 0 to 4, and
in a case where a plurality of R³'s are present, the plurality of R³'s each independently represent a monovalent substituent.

2. The polyamide according to claim 1,
wherein R³ is at least one selected from the group consisting of an alkyl group, an alkoxy group, a cycloalkyl group, an aryl group, a (meth) acryloyl group, an alkenyl group, an alkynyl group, an aryloxy group, an amino group, an alkylamino group, an arylamino group, a cyano group, a nitro group, a silyl group, a carboxy group, a carboxyalkyl group, and a halogeno group.

3. The polyamide according to claim 1 or 2,
wherein one or both of n₁ and n₂ are not 0, and
at least one of R³'s is a methyl group.

4. The polyamide according to any one of claims 1 to 3,
wherein one or both of n₁ and n₂ are 0.

5. The polyamide according to any one of claims 1 to 4,
wherein R¹ is at least one selected from the followings,

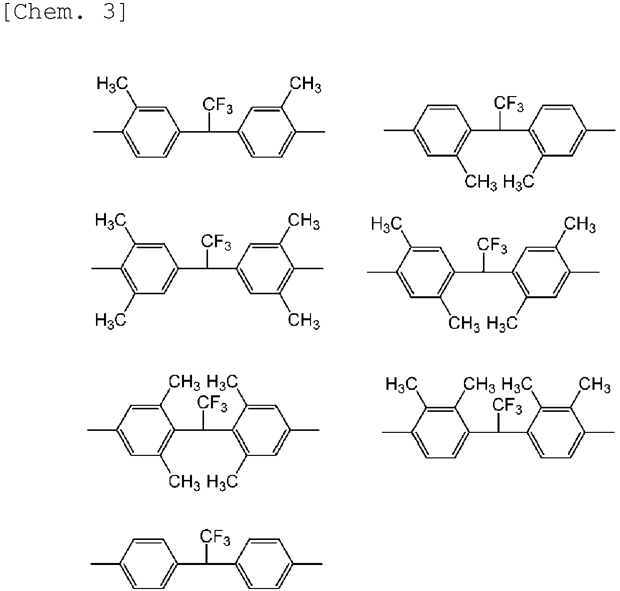

6. The polyamide according to any one of claims 1 to 5,
wherein R² is at least one selected from the followings,

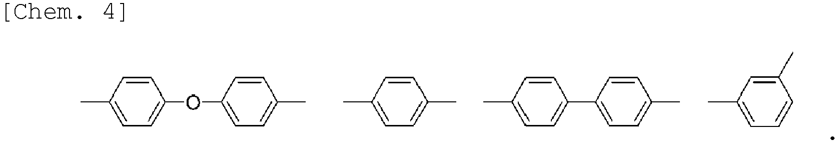

7. The polyamide according to any one of claims 1 to 6,
wherein a weight-average molecular weight is 1000 to 1000000.

8. A polyamide-imide comprising:
a structural unit represented by General Formula [1A], 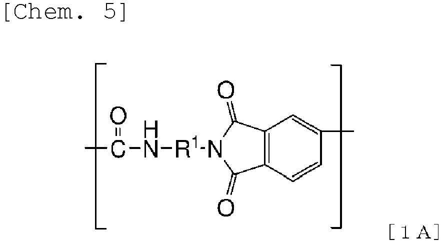
in General Formula [1A],
R¹ is a divalent organic group represented by General Formula [2], 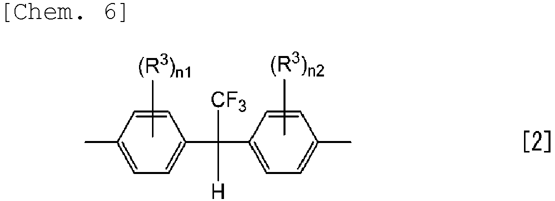
in General Formula [2],
n₁ and n₂ are each independently an integer of 0 to 4, and
in a case where a plurality of R³'s are present, the plurality of R³'s each independently represent a monovalent substituent.

9. The polyamide-imide according to claim 8,
wherein R¹ is at least one selected from the followings,

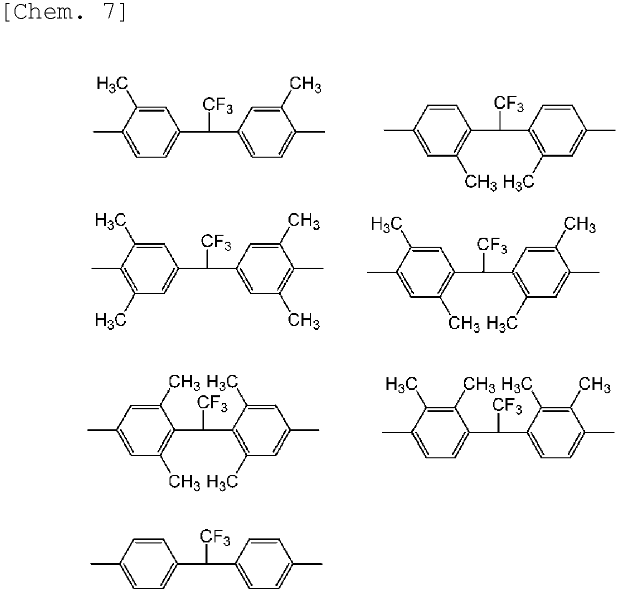

10. The polyamide-imide according to claim 8 or 9,
wherein a weight-average molecular weight is 1000 to 1000000.

11. A polyamide-amic acid comprising:
a structural unit represented by General Formula [1B], 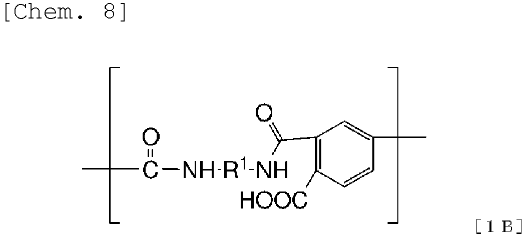
in General Formula [1B],
R¹ is a divalent organic group represented by General Formula [2], 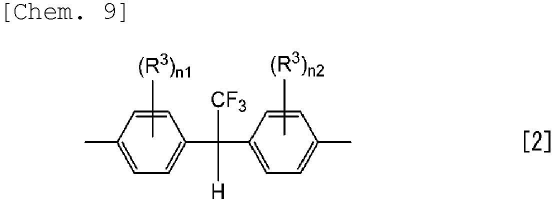
in General Formula [2],
n₁ and n₂ are each independently an integer of 0 to 4, and
in a case where a plurality of R³'s are present, the plurality of R³'s each independently represent a monovalent substituent.

12. The polyamide-amic acid according to claim 11,
wherein R¹ is at least one selected from the followings,

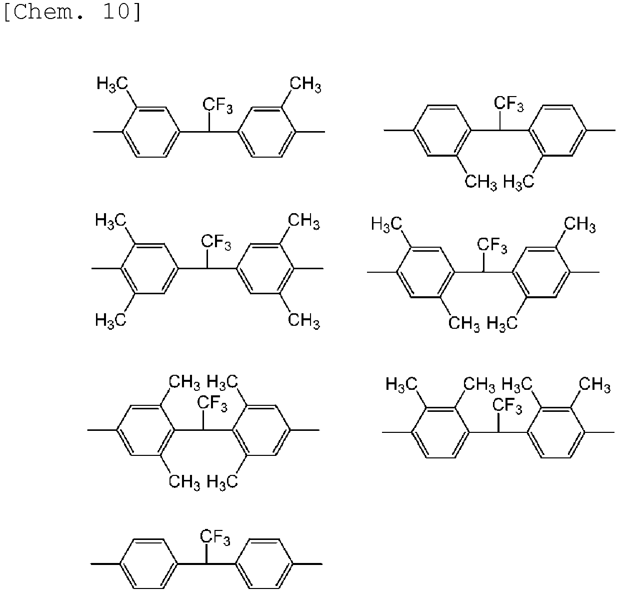

13. The polyamide-amic acid according to claim 11 or 12,
wherein a weight-average molecular weight is 1000 to 1000000.

14. A polyamide solution comprising:
the polyamide according to any one of claims 1 to 7; and
an organic solvent.

15. The polyamide solution according to claim 14,
wherein the organic solvent is at least one selected from the group consisting of an amide-based solvent, an ether-based solvent, an aromatic hydrocarbon-based solvent, a halogen-based solvent, and a lactone-based solvent.

16. The polyamide solution according to claim 14 or 15,
wherein a concentration of the polyamide is 0.1% to 50% by mass.

17. A polyamide-imide solution comprising:
the polyamide-imide according to any one of claims 8 to 10; and
an organic solvent.

18. The polyamide-imide solution according to claim 17,
wherein the organic solvent includes at least one selected from the group consisting of an amide-based solvent, an ether-based solvent, an aromatic hydrocarbon-based solvent, a halogen-based solvent, and a lactone-based solvent.

19. The polyamide-imide solution according to claim 17 or 18,
wherein a concentration of the polyamide-imide is 0.1% to 50% by mass.

20. A polyamide-amic acid solution comprising:
the polyamide-amic acid according to any one of claims 11 to 13; and
an organic solvent.

21. The polyamide-amic acid solution according to claim 20,
wherein the organic solvent includes at least one selected from the group consisting of an amide-based solvent, an ether-based solvent, an aromatic hydrocarbon-based solvent, a halogen-based solvent, and a lactone-based solvent.

22. The polyamide-amic acid solution according to claim 20 or 21,
wherein a concentration of the polyamide-amic acid is 0.1% to 50% by mass.

23. An optical film comprising:
the polyamide according to any one of claims 1 to 7.

24. An optical film comprising:
the polyamide-imide according to any one of claims 8 to 10.

25. An optical film comprising:
the polyamide-amic acid according to any one of claims 11 to 13.

26. An optical film comprising:
the polyamide-imide according to any one of claims 8 to 10; and
the polyamide-amic acid according to any one of claims 11 to 13.

27. A display device comprising:
the optical film according to any one of claims 23 to 26.

28. A production method for a polyamide having a structural unit represented by General Formula [1], the production method comprising:
a step of polycondensing a diamine represented by General formula [2A] and at least one dicarboxylic acid chloride selected from the followings to obtain the polyamide having a structural unit represented by General Formula [1], 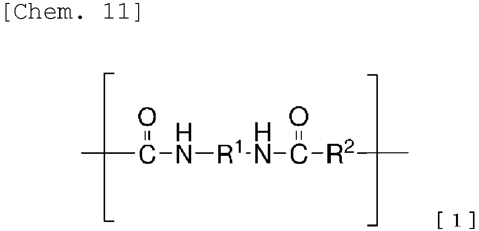
in General Formula [1],
R¹ is a divalent organic group represented by General Formula [2], and
R² is a divalent organic group, 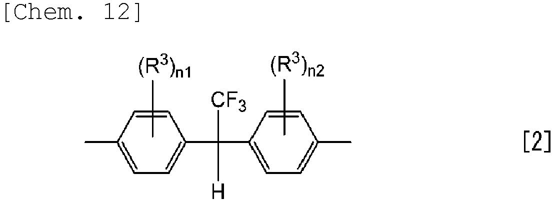
in General Formula [2],
n₁ and n₂ are each independently an integer of 0 to 4, and
in a case where a plurality of R³'s are present, the plurality of R³'s each independently represent a monovalent substituent, 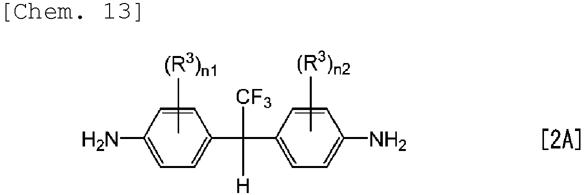
in General Formula [2A],
definitions of n₁, n₂, and R³ are the same as n₁, n₂, and R³ in General Formula [2],

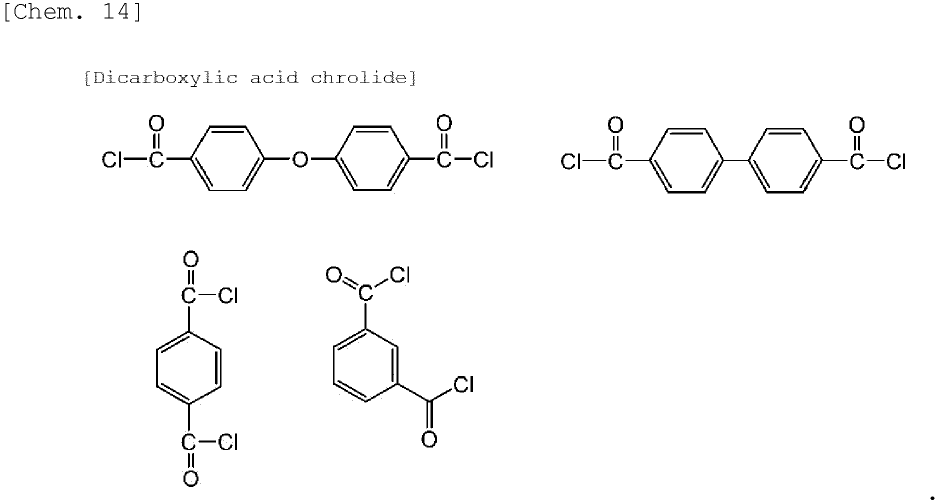

29. The production method for a polyamide according to claim 28,
wherein R³ is at least one selected from the group consisting of an alkyl group, an alkoxy group, a cycloalkyl group, an aryl group, an alkenyl group, an alkynyl group, an aryloxy group, an amino group, an alkylamino group, an arylamino group, a cyano group, a nitro group, a silyl group, and a halogeno group.

30. A production method for a polyamide-imide having a structural unit represented by General Formula [1A], the production method comprising:
a step of polycondensing a diamine represented by General formula [2A] and trimellitic anhydride chloride to obtain the polyamide-imide having a structural unit represented by General Formula [1A], 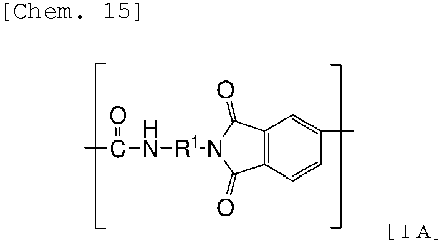
in General Formula [1A],
R¹ is a divalent organic group represented by General Formula [2], 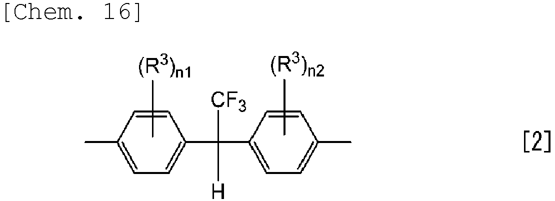
in General Formula [2],
n₁ and n₂ are each independently an integer of 0 to 4, and
in a case where a plurality of R³'s are present, the plurality of R³'s each independently represent a monovalent substituent, 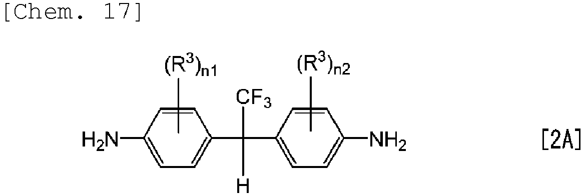
in General Formula [2A], definitions of n₁, n₂, and R³ are the same as n₁, n₂, and R³ in General Formula [2] .

31. A production method for an optical film or a substrate for a display device, comprising:
a coating step of applying the polyamide solution according to any one of claims 14 to 16 to a supporting base material;
a drying step of drying the solvent contained in the applied polyamide solution to obtain a resin film including the polyamide; and
a curing step of heat-treating the resin film to form a cured film.

32. A production method for an optical film or a substrate for a display device, comprising:
a coating step of applying the polyamide-imide solution according to any one of claims 17 to 19 or the polyamide-amic acid solution according to any one of claims 20 to 22 to a supporting base material;
a drying step of drying the solvent contained in the applied polyamide-imide solution or the polyamide-amic acid solution to obtain a resin film including the polyamide-imide or the polyamide-amic acid; and
a curing step of heat-treating the resin film to form a cured film.

33. The production method for an optical film or a substrate for a display device according to claim 31 or 32,
wherein the supporting base material is at least one selected from the group consisting of glass, a silicon wafer, stainless steel, alumina, copper, nickel, polyethylene terephthalate, polyethylene glycol terephthalate, polyethylene glycol naphthalate, polycarbonate, polyimide, polyamide-imide, polyetherimide, polyetheretherketone, polypropylene, polyether sulfone, polyethylene terephthalate, polyphenylene sulfone, and polyphenylene sulfide.

34. The production method for an optical film or a substrate for a display device according to any one of claims 31 to 33,
wherein a film thickness of the cured film is 1 to 1000 pm.

35. The production method for an optical film or a substrate for a display device according to any one of claims 31 to 34,
wherein the drying step is performed at a temperature of 50°C to 250°C.

36. The production method for an optical film or a substrate for a display device according to any one of claims 31 to 35,
wherein the curing step is performed at a temperature of 150°C to 400°C.
